(19) Europäisches Patentamt
European Patent Office
Office européen des brevets

(11) **EP 4 704 360 A1**

(12) **EUROPEAN PATENT APPLICATION**
published in accordance with Art. 153(4) EPC

(43) Date of publication:
**04.03.2026 Bulletin 2026/10**

(21) Application number: **24795954.7**

(22) Date of filing: **19.04.2024**

(51) International Patent Classification (IPC):
**H04L 5/00** (2006.01)

(52) Cooperative Patent Classification (CPC):
**H04B 7/0456; H04B 7/06; H04L 5/00; H04L 41/16; H04L 69/04**

(86) International application number:
**PCT/CN2024/088709**

(87) International publication number:
**WO 2024/222573 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 CN 202310457754**

(71) Applicant: **Vivo Mobile Communication Co., Ltd.
Dongguan, Guangdong 523863 (CN)**

(72) Inventors:
• **REN, Qianyao
Dongguan, Guangdong 523863 (CN)**
• **WU, Hao
Dongguan, Guangdong 523863 (CN)**
• **SUN, Peng
Dongguan, Guangdong 523863 (CN)**

(74) Representative: **Michalski Hüttermann & Partner
Patentanwälte mbB
Kaistraße 16A
40221 Düsseldorf (DE)**

(54) **INFORMATION PROCESSING METHOD, INFORMATION PROCESSING APPARATUS, TERMINAL AND NETWORK SIDE DEVICE**

(57) This application discloses an information processing method, an information processing apparatus, a terminal, and a network side device, and belongs to the field of communication technologies. The information processing method according to an embodiment of this application includes: A terminal obtains first information in a case that the terminal reports channel information to a network side device based on an AI mode. The terminal performs first processing on first channel information based on the first information, to obtain second channel information, where the first processing is used for restricting an amplitude of a projection coefficient corresponding to a first beam in the first channel information, the AI mode is used for processing the second channel information, and the first information is related to at least one of the first beam and the first processing.

A terminal obtains first information in a case that the terminal reports channel information to a network side device based on an AI mode — 301

The terminal performs first processing on first channel information based on the first information, to obtain second channel information, where the first processing is used for restricting an amplitude of a projection coefficient corresponding to a first beam in the first channel information, and the AI mode is used for processing the second channel information — 302

**FIG. 3**

EP 4 704 360 A1

**Description**

**CROSS-REFERENCE TO RELATED APPLICATIONS**

This application claims priority to Chinese Patent Application No. 202310457754.9, filed in China on April 24, 2023, which is incorporated by reference in its entirety.

**TECHNICAL FIELD**

This application belongs to the technical field of communications, and in particular, to an information processing method, an information processing apparatus, a terminal, and a network side device.

**BACKGROUND**

In the related art, a terminal may compress channel information by using an encoding artificial intelligence (Artificial Intelligence, AI) model, and report compressed channel feature information. A network side may recover, by using a decoding AI model, the channel feature information reported by the terminal, to obtain terminal channel information. In this way, overhead of reporting the channel information by the terminal can be reduced.
However, in a case that a target channel includes at least two beams (beam), AI-based channel information includes channel information of all the beams. In this way, for channel information of some beams not needed for the network side, for example, based on requirements of interference suppression or radiation management, a base station cannot radiate power in some directions. However, the terminal still reports channel feature information of a beam in which power cannot be radiated by the base station, thereby increasing complexity and a data volume of the channel feature information reported by the terminal, and further wasting air interface resources and computing power of the network side.

**SUMMARY**

Embodiments of this application provide an information processing method, an information processing apparatus, a terminal, and a network side device. The terminal restricts, according to amplitude restriction information, some amplitudes in reported channel information. For example, for channel information of some unneeded or unimportant beams, amplitude restriction may be performed. Then, the restricted channel information is input to an encoding AI unit, and channel feature information output by the encoding AI unit is reported to a network side. In this way, interference of the amplitude-restricted channel information with other channel information can be reduced, and complexity and a data volume of the channel feature information can be reduced.
According to a first aspect, an information processing method is provided. The method includes:

obtaining, by a terminal, first information in a case that the terminal reports channel information to a network side device based on an AI mode; and
performing, by the terminal, first processing on first channel information based on the first information, to obtain second channel information, where the first processing is used for restricting an amplitude of a projection coefficient corresponding to a first beam in the first channel information, the AI mode is used for processing the second channel information, and the first information is related to at least one of the first beam and the first processing.

According to a second aspect, an information processing method is provided. The method includes:
transmitting, by a network side device, first information to a terminal in a case that the terminal reports channel information to the network side device based on an AI mode, where the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.
According to a third aspect, an information processing apparatus is provided, including:

a first obtaining module, configured to obtain first information in a case that a terminal reports channel information to a network side device based on an AI mode; and
a first processing module, configured to perform first processing on first channel information based on the first information, to obtain second channel information, where the first processing is used for restricting an amplitude of a projection coefficient corresponding to a first beam in the first channel information, the AI mode is used for processing the second channel information, and the first information is related to at least one of the first beam and the first processing.

According to a fourth aspect, an information processing apparatus is provided, including:
a first transmitting module, configured to transmit first information to a terminal in a case that the terminal reports channel information to a network side device based on an AI mode, where the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.

According to a fifth aspect, a terminal is provided. The terminal includes a processor and a memory. The memory stores a program or an instruction executable on the processor. The program or the instruction, when executed by the processor, implements the steps of the method according to the first aspect.

According to a sixth aspect, a terminal is provided, including a processor and a communication interface. The communication interface is configured to obtain first information in a case that the terminal reports channel information to a network side device based on an AI mode. The processor is configured to perform, based on the first information, first processing on the first channel information, to obtain second channel information, where the first processing is used for restricting an amplitude of a projection coefficient corresponding to a first beam in the first channel information, the AI mode is used for processing the second channel information, and the first information is related to at least one of the first beam and the first processing.

According to a seventh aspect, a network side device is provided. The network side device includes a processor and a memory. The memory stores a program or an instruction executable on the processor. The program or the instruction, when executed by the processor, implements the steps of the method according to the second aspect.

According to an eighth aspect, a network side device is provided, including a processor and a communication interface. The communication interface is configured to transmit first information to a terminal in a case that the terminal reports channel information to a network side device based on an AI mode, where the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.

According to a ninth aspect, a readable storage medium is provided. The readable storage medium has a program or an instruction stored therein. The program or the instruction, when executed by a processor, implements the steps of the method according to the first aspect, or implements the steps of the method according to the second aspect.

According to a tenth aspect, a wireless communication system is provided, including a terminal and a network side device. The terminal may be configured to perform the steps of the method according to the first aspect. The network side device may be configured to perform the steps of the method according to the second aspect.

According to an eleventh aspect, a chip is provided. The chip includes a processor and a communication interface. The communication interface is coupled to the processor. The processor is configured to execute a program or instruction, to implement the method according to the first aspect or implement the method according to the second aspect.

According to a twelfth aspect, a computer program/program product is provided. The computer program/program product is stored in a storage medium. The program/program product is executed by at least one processor, to implement the steps of the information processing method according to the first aspect, or implement the steps of the information processing method according to the second aspect.

In the embodiments of this application, in a case that a terminal reports channel information to a network side device based on an AI mode, the terminal may learn first information, and restrict, based on the first information, an amplitude of a projection coefficient corresponding to a first beam in first channel information, thereby implementing amplitude restriction for at least some beams of the channel information processed in the AI mode before the channel information is processed based on an AI unit. In this way, for channel information of some beams not needed for the network side, such as requirements of interference suppression or radiation management, amplitudes related to the beams in the channel feature information may be restricted. In the channel information received by the network side and recovered based on the channel feature information, amplitudes of the beams are also restricted, so as not to analyze and calculate the channel information of the beams. To be specific, complexity and a data volume of the channel feature information reported by the terminal can be reduced, thereby reducing waste of air interface resources and reducing waste of computing power of the network side.

## BRIEF DESCRIPTION OF THE DRAWINGS

FIG. 1 is a schematic structural diagram of a wireless communication system to which embodiments of this application can be applied;

FIG. 2a is a schematic architectural diagram of a neural network model;

FIG. 2b is a schematic diagram of a neuron;

FIG. 3 is a flowchart of an information processing method according to an embodiment of this application;

FIG. 4a is a schematic diagram of a time domain position of a PUSCH reporting time point in the related art;

FIG. 4b is a schematic diagram of a time domain position of a PUSCH reporting time point according to an embodiment of this application;

FIG. 5 is a flowchart of another information processing method according to an embodiment of this application;

FIG. 6 is a schematic structural diagram of an information processing apparatus according to an embodiment of this application;

FIG. 7 is a schematic structural diagram of another information processing apparatus according to an embodiment of this application;

FIG. 8 is a schematic structural diagram of a communication device according to an embodiment of this application;

FIG. 9 is a schematic structural diagram of a terminal according to an embodiment of this application; and

FIG. 10 is a schematic structural diagram of a network side device according to an embodiment of this application.

## DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

In this application, the terms "first" and "second" are used for distinguishing similar objects, but are not used for describing a specific sequence or order. It should be understood that the terms used in this way may be transposed where appropriate, so that the embodiments of this application can be implemented in a sequence other than those illustrated or described herein. In addition, objects defined by "first" and "second" are generally of the same class and do not limit the number of objects. For example, one or more first objects may be arranged. In addition, "or" in this application indicates at least one of connected objects. For example, "A or B" covers three solutions: solution 1 in which A is included but B is not included; solution 2 in which B is included but A is not included; and solution 3 in which both A and B are included. The character "/" usually indicates an "or" relationship between associated objects.

The term "indication" in this application may be either a direct indication (or an explicit indication) or an indirect indication (or an implicit indication). The direct indication may be understood as that a transmitter clearly informs a receiver of specific information, operations to be performed, request results, or the like in the transmitted indication. The indirect indication may be understood as that the receiver determines the corresponding information according to the indication transmitted by the transmitter, or makes a judgment and determines operations to be performed, request results, or the like according to the judgment result.

It should be noted that the technology described in the embodiments of this application is not limited to a long term evolution (Long Term Evolution, LTE)/LTE-advanced (LTE-Advanced, LTE-A) system, and may alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often used interchangeably, and the described technology may be applied to the systems and radio technologies mentioned above, and may alternatively be applied to other systems and radio technologies. The following description describes a new radio (New Radio, NR) system for illustration, and NR terminology is used in most of the following descriptions. However, these technologies may alternatively be applied to systems other than the NR system, such as 6th generation (6th Generation, 6G) communication systems.

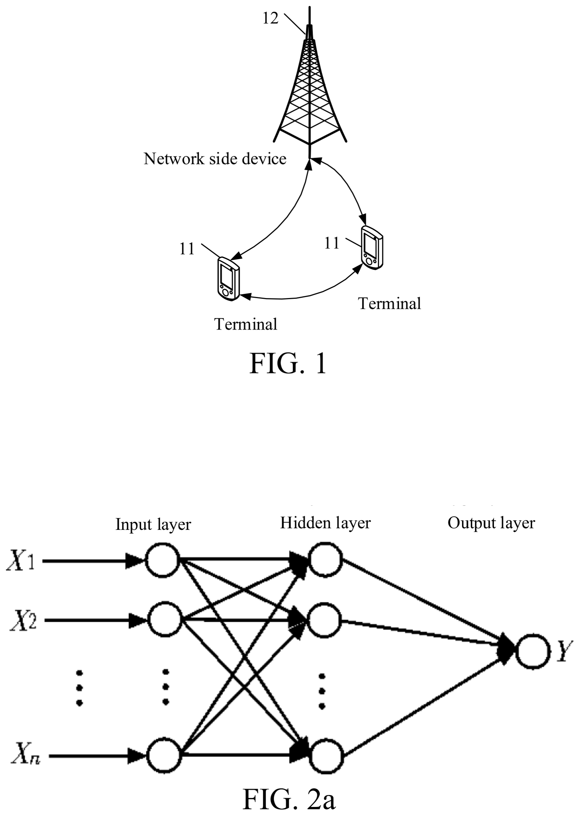

FIG. 1 shows a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart home appliance (home equipment with a wireless communication function, such as a refrigerator, a TV, a washing machine, or furniture), and a terminal side device such as a game console, a personal computer (Personal Computer, PC), an automated teller machine, or a self-service machine. The wearable device includes: a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The vehicle user equipment may alternatively be referred to as a vehicle terminal, a vehicle controller, a vehicle module, a vehicle component, a vehicle chip, a vehicle unit, or the like. It should be noted that a specific type of the terminal 11 is not limited in the embodiments of this application. The network side device 12 may include an access network device or a core network device. The access network device may alternatively be referred to as a radio access network (Radio Access Network) device, a radio access network function, or a radio access network element. The access network device may include a base station, a wireless local area network (Wireless Local Area Network, WLAN) access point (Access Point, AS), a wireless fidelity (Wireless Fidelity, WiFi) node, or the like. The base station may be referred to as a node B (Node B, NB), an evolved mode B (evolved Node B, eNB), the next generation Node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP) or some other suitable terms in the field as long as the same technical effect is achieved. The base station is not limited to a specific technical word. It should be noted that in the embodiments of this application, introduction is made only taking the base station in the NR system as an example, and the specific type of the base station is not limited.

The core network device may include, but is not limited to, at least one of the following: a core network node, a core network function, a location management function (Location Management Function, LMF), a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized Network Configuration, CNC), a network repository function (Network Repository Function, NRF), a network exposure function (Network Exposure Function, NEF), local NEF (Local NEF or L-NEF), a binding support function (Binding Support Function, BSF), an application function (Application Function, AF), etc. It should be noted that, the core network device in the NR system is used only as an example for description in the embodiments of this application, but a specific type of the core network device is not limited. It should be noted that, the core network device in the NR system is used only as an example for description in the embodiments of this application, but a specific type of the core network device is not limited.

In a wireless communication technology, an accurate channel state information (channel state information, CSI) feedback is crucial to a channel capacity. Especially for a multi-antenna system, a transmitting end may optimize signal transmission based on CSI for a better match with a state of a channel. For example, a channel quality indicator (Channel Quality Indicator, CQI) may be used for selecting a proper modulation and coding scheme (Modulation and Coding Scheme, MCS), to implement link adaptation. A precoding matrix indicator (Precoding Matrix Indicator, PMI) may be used for implementing eigen beamforming (eigen beamforming), to maximize strength of a received signal, or suppress interference (e.g., interference between cells or interference between a plurality of users). Therefore, CSI acquisition has been a research hotspot since a multi-antenna technology (e.g., multi-input multi-output (Multi-Input Multi-Output, MIMO)) is proposed.

Generally, the network side device transmits a CSI reference signal (CSI-Reference Signals, CSI-RS) on some time-frequency resources of a slot (slot). The terminal performs channel estimation based on the CSI-RS, calculates channel information on this slot, and feeds back a PMI to the base station through a codebook. The network side device obtains the channel information through combination based on codebook information fed back by the terminal. Before the terminal reports CSI next time, the network side device performs data precoding and multi-user scheduling based on the channel information.

To further reduce CSI feedback overheads, the terminal may change PMI reporting on each sub-band to PMI reporting according to a delay domain (delay domain, i.e., frequency domain). Since channels in the delay domain are more concentrated, PMIs on all sub-bands may be approximately represented by PMIs with fewer delays. In other words, delay-domain information is compressed before reported.

Similarly, to reduce overheads, the network side device may precode the CSI-RS, and transmit an encoded CSI-RS to the terminal. The terminal learns of a channel corresponding to the encoded CSI-RS. The terminal only needs to select several ports having high strength from ports indicated by the network side device, and report coefficients corresponding to the ports.

In the related art, channel information is compressed by using an AI unit, so that a compression effect of channel feature information can be improved. Specifically, the terminal may estimate a CSI reference signal (CSI Reference Signal, CSI-RS) or a tracking reference signal (Tracking Reference Signal, TRS), perform calculation according to the estimated channel information, to obtain calculated channel information, then encode the calculated channel information or original estimated channel information by using an encoder, to obtain an encoding result, and finally transmit the encoding result to the base station. On the side of the base station, after receiving the encoding result, the base station may input the encoding result to a decoder, and channel information is recovered by using the decoder. Specifically, a CSI compression feedback scheme based on a neural network includes: The terminal compresses and encodes the channel information by using an encoding network, and transmits a compressed content to the base station. The base station decodes the compressed content by using a decoding network to recover the channel information. In this case, the decoding network of the base station and the encoding network of the terminal need to be jointly trained to achieve a proper match degree. The channel information serves as an input of the encoding network, and encoded information, i.e. channel feature information serves as an output thereof. The encoded information serves as an input of the decoding network, and the channel information recovered serves as an output thereof.

In a conventional codebook-based CSI calculation process, the terminal selects several relatively strong beams from a plurality of candidate discrete Fourier transform (Discrete Fourier Transform, DFT) beams, and reports projection values of the beams to the base station. The base station recovers a precoding matrix according to the beams and the corresponding projection values.

Due to, for example, requirements of interference suppression or radiation management, the base station cannot radiate power to some directions. To be specific, even if projection values calculated by the terminal are very large for some beams, the base station does not select these beams. If the base station continues to report projection coefficients of these beams indiscriminately, a data volume of the reported channel information is large, and the base station also needs to perform additional screening on the channel information of these beams, resulting in a waste of air interface resources and a waste of computing power of the network side device caused by reporting of the channel information.

To resolve the foregoing problem, in conventional codebook-based channel information reporting, to prevent the terminal from reporting channel information of some unneeded beam directions, the base station usually stipulates that some beam directions are not selected. In this way, the terminal only needs to select reported channel information from other beams. Alternatively, a codebook subset restriction (Codebook Subset Restriction, CBSR) is introduced into the codebook calculation process, to restrict a range of a beam selected by the terminal, or restrict a maximum amplitude of reporting by the terminal on a corresponding beam. To be specific, precoding information (precoder) actually reported by the terminal may be different from precoding information directly calculated according to a channel matrix.

Specifically, in the related art, the CBSR is indicated by using a high-layer parameter n1-n2-codebookSubsetRestriction, an unrestricted beam may be selected, and a maximum reporting amplitude is not restricted. For a restricted beam, if the terminal supports amplitude subset restriction, a maximum amplitude is indicated by the base station. Otherwise, the base station may instruct the terminal to normally report, to be specific, report channel information on which amplitude restriction is not performed. Alternatively, for N beams selected by the terminal, the base station may instruct M of the beams to not report channel information, where M is less than N. In this way, for some beams not needed for the network side device, strengths of the beams in the channel information reported by the terminal are restricted, so that the network side device can directly select, based on the strengths of the beams, a target beam for subsequent power radiation.

However, in a channel information reporting process based on an AI mode, there is no process of selecting a beam and calculating a projection coefficient on the beam. Thus, the foregoing scheme of selecting a beam or a CBSR cannot be applied. However, in the embodiments of this application, for a channel information reporting scene in the AI mode, a scheme of how to restrict amplitudes of at least some beams reported by the terminal is provided.

In the embodiments of this application, the channel information reporting based on the AI mode may be understood as: The terminal compresses second channel information by using a first AI unit (which may be an encoder or an AI unit having an encoding function), to obtain target channel feature information. The terminal reports the target channel feature information to the network side device. The network side device recovers the target channel feature information based on a second AI unit (which may be a decoder or an AI unit having a decoding function), to obtain third channel information.

It should be noted that the AI unit in the embodiments of this application may alternatively be referred to as an AI model, an AI structure, or the like. Alternatively, the AI unit may be a processing unit that can implement a particular algorithm, formula, processing procedure, capability, or the like related to AI. Alternatively, the AI unit may be a processing method, algorithm, function, module, or unit for a particular data set. Alternatively, the AI unit may be a processing method, algorithm, function, module, or unit that runs on AI-related hardware such as a graphics processing unit (Graphics Processing Unit, GPU), a neural-network processing unit (Neural-Network Processing Unit, NPU), a tensor processing unit (Tensor Processing Unit, TPU), or an application specific integrated circuit (Application Specific Integrated Circuit, ASIC). This is not specifically limited in this application. Optionally, the particular data set includes an input or an output of the AI unit.

Optionally, an identifier of the AI unit may be an AI model identifier, an AI structure identifier, an AI algorithm identifier, or an identifier of a particular data set associated with the AI unit, or an identifier of a particular scene, environment, channel feature, or device related to the AI, or an identifier of a function, feature, capability, or module related to the AI. This is not specifically limited in this application.

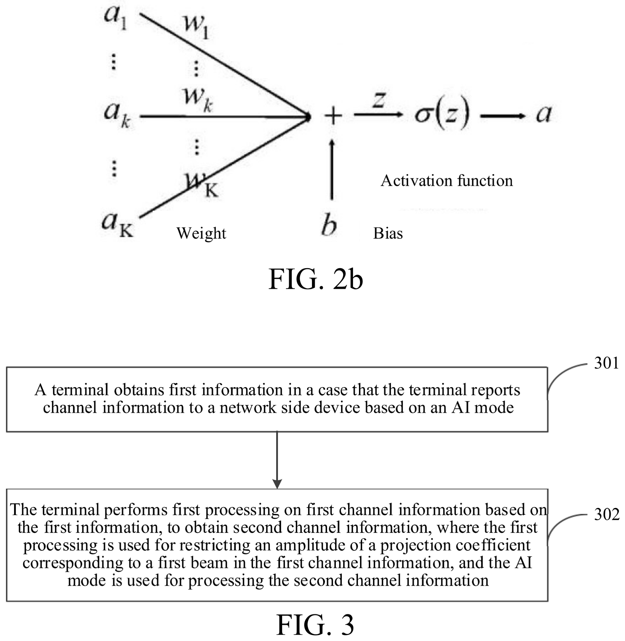

In addition, there are various implementations for the AI function, such as a neural network, a decision-making tree, a support vector machine, and a Bayesian classifier. This is not specifically limited in this application. For ease of description, in the embodiments of this application, an example in which the AI unit is a neural network is used, but the specific type of the AI unit is not limited. For example, as shown in FIG. 2a, a neural network model includes an input layer, a hidden layer, and an output layer. A possible output result (Y) may be predicted according to access information (X1-Xn) obtained by the input layer. The neural network model includes a large number of neurons. As shown in FIG. 2b, parameters of the neurons include: an input parameter al to aK, a weight w, a bias b, and an activation function $\sigma(z)$, and an output value a is obtained according to these parameters. Common activation functions include an S-type growth curve (Sigmoid) function, a hyperbolic tangent (tanh) function, a rectified linear unit (Rectified Linear Unit, ReLU), and the like, and z in the function $\sigma(z)$ may be calculated by using the following formula:

$$z = a_1 w_1 + \cdots + a_k w_k + a_K w_K + b$$

where K represents a total number of input parameters.

Parameters of the neural network are optimized through an optimization algorithm. The optimization algorithm is a type of algorithm that is conducive to minimization or maximization of an objective function (sometimes referred to as a loss function). The objective function is usually a mathematical combination of a model parameter and data. For example, given data X and a corresponding label Y, a neural network model f (.) is constructed. After the neural network model is constructed, a predicted output f(x) may be obtained based on the input x, and a difference (f(x)-Y) between a predicted value and a real value may be computed. This is the loss function. The objective of this application is to find proper W and b, to minimize the value of the loss function. A smaller loss value indicates that the model is closer to the real situation.

Currently, common optimization algorithms are basically based on an error back propagation (error Back Propagation, BP) algorithm. A basic idea of the BP algorithm is that a learning process includes two processes: signal forward propagation and error back propagation. During the forward propagation, an input sample is transmitted from an input layer, processed layer by layer by each hidden layer, and then transmitted to an output layer. If an actual output of the output layer does not match an expected output, error back propagation is performed. The error back propagation is to propagate an output error layer by layer back to the input layer through the hidden layers in a particular form, and assign the error to all units of each layer, so as to obtain an error signal of the units of each layer. The error signal is used as a basis for correcting a weight of each unit. Such a weight adjustment process at each layer of signal forward propagation and error back propagation is performed cyclically. The process of continuously adjusting the weight is a learning and training process of the network. This process continues until errors output by the network are reduced to an acceptable level or until a preset quantity of learning times are reached.

Common optimization algorithms include gradient descent (Gradient Descent), stochastic gradient descent (Stochastic Gradient Descent, SGD), mini-batch gradient descent (mini-batch gradient descent), momentum (Momentum), Nesterov (stochastic gradient descent with momentum), adaptive gradient descent (Adaptive gradient descent, Adagrad), adaptive learning rate adjustment (Adadelta), root mean square prop (root mean square prop, RMSprop), adaptive moment estimation (Adaptive Moment Estimation, Adam), etc.

During error back propagation, in these optimization algorithms, an error/loss is obtained according to the loss function, a gradient is obtained by calculating a derivative/partial derivative of a current neuron, and adding an effect such as a learning rate and a previous gradient/derivative/partial derivative, and the gradient is transferred to an upper layer.

The AI unit in the embodiments of this application includes:

a first AI unit, namely an AI unit corresponding to an encoder, deployed on a terminal side, where input information is channel information, and output information is channel feature information; and
a second AI unit, namely an AI unit corresponding to a decoder, deployed on a network side, where input information is channel feature information, and output information is recovered channel information.

The following describes in detail an information processing method, an information processing apparatus, and a related device provided in embodiments of this application through some embodiments and application scenes thereof with reference to the accompanying drawings.

Referring to FIG. 3, an embodiment of this application provides an information processing method. The information processing method may be performed by a terminal. The terminal may be a terminal 11 of any type listed in FIG. 1, or a terminal other than the terminal types listed in the embodiment shown in FIG. 1. This is not specifically limited herein.

As shown in FIG. 3, the information processing method may include the following steps.

Step 301: A terminal obtains first information in a case that the terminal reports channel information to a network side device based on an AI mode, where the first information is related to at least one of a first beam and first processing.

In an implementation, the first information may be configured or indicated by the network side device.

In another implementation, the first information may be agreed upon by a protocol.

In still another implementation, the first information may be partially configured or indicated by the network side device, and partially agreed upon by a protocol.

Step 302: The terminal performs first processing on first channel information based on the first information, to obtain second channel information, where the first processing is used for restricting an amplitude of a projection coefficient corresponding to a first beam in the first channel information, the AI mode is used for processing the second channel information, and the first information is related to at least one of the first beam and the first processing.

In an implementation, the first beam may be a beam not needed for or not selected by the network side device.

It should be noted that, in this embodiment of this application, the channel information is obtained by the terminal performing channel estimation or measurement on CSI reference signals (CSI-Reference Signals, CSI-RS), and may specifically include a channel matrix or a precoding matrix. For ease of description, in this embodiment of this application, an example in which the channel information is a precoding matrix is usually used for description. This is not specifically limited herein.

Optionally, the first channel information is channel information of one sub-band. To be specific, first processing is independently performed on channel information of each sub-band.

Optionally, the first channel information is channel information of one layer. To be specific, first processing is independently performed on channel information of each layer.

In an implementation, the first information is related to the first beam. The first information may indicate the first beam or indicate an identifier, a direction, a direction identifier, or the like of the first beam, so that the first terminal determines, according to the first information, which beam is the first beam.

In another implementation, the first information is related to the first processing. The first information may indicate a particular type of the first processing performed on the first information. For example, the first information includes a parameter related to the first processing, and a type of the first processing, such as amplitude restriction processing, partial amplitude restriction processing, or power restriction processing, so that the first terminal performs the first processing according to the first information.

As an optional implementation, the first information includes at least one of the following:

amplitude restriction information;
beam selection information; and
power restriction information.

In an implementation, the first information may include beam selection information. The beam selection information may indicate a second beam selected to be reported. In this case, a projection coefficient of a second beam in second channel information may be the same as a projection coefficient of a second beam in the first channel information. For an unselected first beam, an amplitude of a projection coefficient may be set to zero or 1, and the second beam and the second beam are different beams.

In another implementation, the first information may include amplitude restriction information. In this case, the first processing may include restricting a maximum projection coefficient amplitude of the first beam. In this case, the amplitude of the projection coefficient corresponding to the first beam may be restricted to be less than or equal to the maximum projection coefficient amplitude. To be specific, a smaller value of the amplitude of the projection coefficient of the first beam in the first channel information and the maximum projection coefficient amplitude is used as the amplitude of the projection coefficient of the first beam in the second channel information.

In still another implementation, the first information may include beam selection information and amplitude restriction information. In this case, the beam selection information may indicate a first beam on which amplitude restriction needs to be performed. For a selected first beam, an amplitude of a projection coefficient may be set to zero or set to 1.

Optionally, that the terminal restricts an amplitude of a first projection coefficient of the first beam based on the first information includes at least one of the following:
The terminal sets the amplitude of the first projection coefficient of the first beam to zero based on the first information.

The terminal restricts the amplitude of the first projection coefficient of the first beam below a maximum projection coefficient amplitude based on the first information, where the first information includes the maximum projection coefficient amplitude.

The terminal adjusts the amplitude of the first projection coefficient of the first beam to a product of the amplitude of the first projection coefficient and a projection coefficient amplitude ratio based on the first information, where the first information includes the projection coefficient amplitude ratio.

In the first manner, the amplitude of the first projection coefficient of the first beam is set to zero, so that the second channel information does not include channel information related to the first beam. In this way, in a process of reporting the channel information based on AI, the terminal may not report the channel information related to the first beam.

In the second manner, the amplitude of the first projection coefficient of the first beam is restricted below the maximum projection coefficient amplitude. In a case that the amplitude of the first projection coefficient of the first beam is less than or equal to the maximum projection coefficient amplitude, the first projection coefficient of the first beam remains unchanged in the second channel information. To be specific, the amplitude of the first projection coefficient of the first beam is not processed. In a case that the amplitude of the first projection coefficient of the first beam is greater than the maximum projection coefficient amplitude, the amplitude of the first projection coefficient of the first beam is adjusted to the maximum projection coefficient amplitude. In this case, the first projection coefficient of the first beam in the second channel information is different from the first projection coefficient of the first beam in the first channel information.

Optionally, the first beam may include any beam. In this case, the first information may include only a maximum projection coefficient amplitude and does not indicate which beam needs to be subjected to amplitude restriction. The terminal may restrict the projection coefficient amplitude on each beam to be less than or equal to the maximum projection coefficient amplitude according to the first information.

It should be noted that, how the terminal performs power restriction based on the amplitude restriction information may be implemented based on the terminal, provided that the amplitude of the projection coefficient on the first beam is less than or equal to the maximum projection coefficient amplitude indicated by a network side in the second channel information obtained after the first processing, and a specific value of the amplitude of the projection coefficient on the first beam in the second channel information may be determined by the terminal.

In the third manner, the amplitude of the first projection coefficient of the first beam is adjusted to a product of the amplitude of the first projection coefficient and a projection coefficient amplitude ratio, so that the amplitude of the first projection coefficient of the first beam may be reduced according to a preset ratio. The projection coefficient amplitude ratio is less than 1 and greater than or equal to 0. Optionally, in a case that the projection coefficient amplitude ratio is close to or even equal to 0, the adjusting the amplitude of the first projection coefficient of the first beam to a product of the amplitude of the first projection coefficient and a projection coefficient amplitude ratio is similar to setting the amplitude of the first projection coefficient of the first beam to zero.

In still another implementation, the first information may include power restriction information. In this case, the first processing may include restricting a maximum power of the first beam. In this case, the power of the projection coefficient corresponding to the first beam may be restricted to be less than or equal to the maximum power. To be specific, a smaller value of the power of the projection coefficient of the first beam in the first channel information and the maximum power is used as the power of the projection coefficient of the first beam in the second channel information.

Optionally, the first beam may include any beam. In this case, the first information may include only a maximum power and does not indicate which beam needs to be subjected to power restriction. The terminal may restrict the power of the projection coefficient on each beam to be less than or equal to the maximum power according to the first information.

It should be noted that, how the terminal performs power restriction based on the power restriction information may be implemented based on the terminal, provided that the power of the projection coefficient on the first beam is less than or equal to the maximum power indicated by the network side in the second channel information obtained after the first processing, and a specific value of the power of the projection coefficient on the first beam in the second channel information may be determined by the terminal.

The first information may alternatively include beam selection information and power restriction information, to perform power restriction on a selected first beam indicated by the beam selection information.

In this implementation, before channel information is compressed by using an AI unit, at least one of beam selection, amplitude restriction, and power restriction processing is performed by using an additional operation on the channel information before compression, so that in a process of reporting the channel information in an AI mode, strengths of at least some beams in the reported channel information can be reduced in a targeted manner.

As an optional implementation, that the terminal performs first processing on first channel information based on the first information, to obtain second channel information includes:

The terminal projects the first channel information to at least one discrete Fourier transform (DFT) beam, to obtain a first projection coefficient of the at least one DFT beam.

The terminal restricts an amplitude of a first projection coefficient of the first beam based on the first information, to obtain a second projection coefficient of the at least one DFT beam, where the at least one DFT beam includes the first beam.

The terminal determines second channel information based on the at least one DFT beam and the second projection coefficient.

In an implementation, the at least one DFT beam may be a candidate orthogonal beam pre-configured or indicated by a base station.

In another implementation, the at least one DFT beam may be an orthogonal beam agreed upon by a protocol or determined based on a rule agreed upon by the protocol.

In this implementation, the first channel information is projected onto at least one orthogonal beam, to obtain a first projection coefficient corresponding to each orthogonal beam. In this way, the first projection coefficient of the first beam may be adjusted based on the first information, for example, zero setting, or amplitude restriction, or power restriction, to obtain a second projection coefficient satisfying the first information. Then, the at least one orthogonal beam and a corresponding second projection coefficient are used for recovering a precoding matrix. In this case, the recovered precoding matrix is used as second channel information, and strength of the first beam in the second channel information is restricted.

In a case that there are at least two DFT beams, projection coefficients of some of the DFT beams may be adjusted based on beam selection information.

Optionally, the beam selection information includes at least one of the following:

selection information of the first beam;
first indication information, where the first indication information is used for indicating the first beam in a candidate beam set;
a first parameter, where the first parameter includes at least one of N1, N2, O1, and O2, the first parameter corresponds to the first beam, N1 and N2 represent beam identifiers in a horizontal or vertical direction, and O1 and O2 represent rotation factors in the horizontal or vertical direction;
information of a direction corresponding to the first beam;
identification information of a direction corresponding to the first beam; and
a bit map, where an element corresponding to the first beam in the bit map is a first value, an element corresponding to a second beam in the bit map is a second value, and the second beam includes a beam other than the first beam in the at least two DFT beams.

In an implementation, in a case that the beam selection information includes the foregoing first indication information, the network side device may pre-configure or indicate a beam candidate set and an identifier of each candidate beam in the beam candidate set. In this case, the network side device may directly indicate an identifier of a first beam in the beam candidate set through the beam selection information.

In another implementation, the candidate beam set and the identifier of each candidate beam in the candidate beam set may be agreed upon in a protocol. In this way, the network side device may indicate the identifier of the first beam in the candidate beam set by using the beam selection information.

In an implementation, in a case that the first beam is a DFT beam, the network side device may indicate at least one of N1, N2, O1, and O2. The terminal may calculate a beam vector (beam vector) of the first beam according to at least one of N1, N2, O1, and O2.

In an implementation, the network side device may indicate a direction or a direction identifier of the first beam. In this way, the terminal may generate the first beam corresponding to the direction.

Optionally, in a case that the first information includes information of a direction corresponding to the first beam or identification information of a direction corresponding to the first beam, the method further includes:

The terminal generates an orthogonal basis in a first direction according to a preset rule, where the orthogonal basis corresponds to the first beam, and the first direction is a direction corresponding to information of a direction corresponding to the first beam or a direction corresponding to identification information of a direction corresponding to the first beam.

The preset rule may be a rule agreed upon in a protocol, or a rule configured or indicated by the network side device.

For example, the terminal generates the orthogonal basis according to the following formula:

$$
\mathbf{u}_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ 1 & N_2 = 1 \end{cases}
$$

$$
v_{l,m} = \begin{bmatrix} \mathbf{u}_m & e^{j\frac{2\pi l}{O_1 N_1}}\mathbf{u}_m & \cdots & e^{j\frac{2\pi l(N_1-1)}{O_1 N_1}}\mathbf{u}_m \end{bmatrix}^T
$$

$$\bar{v}_{l,m} = \begin{bmatrix} u_m & e^{j\frac{4\pi l}{O_1 N_1}}u_m & \dots & e^{j\frac{4\pi l(N_1/2-1)}{O_1 N_1}}u_m \end{bmatrix}^T$$

where $u_m$ represents a DFT orthogonal basis having an index (index) of m.

$v_{l,m}$ represents a DFT orthogonal basis having indexes of $l$ and $m$ in an N1 direction and an N2 direction.

$\bar{v}_{l,m}$ represents a DFT orthogonal basis having indexes of $l$ and $m$ in an N1 direction and an N2 direction of a dual-polarized antenna.

m represents an index of a DFT orthogonal basis, in an N2 direction.

$l$ represents an index of a DFT orthogonal basis, in an N1 direction.

$N_1$ represents the number of CSI-RS ports in a horizontal or vertical direction.

$N_2$ represents the number of CSI-RS ports in a horizontal or vertical direction.

$O_1$ represents an over-sampling multiple in a horizontal or vertical direction.

$O_2$ represents an over-sampling multiple in a horizontal or vertical direction.

In an implementation, the base station may indicate a bit map (bit map), where a terminal element of the bit map is in a one-to-one correspondence with a beam. In this way, by adjusting values of elements in the bit map, the corresponding beam may be indicated as a beam that needs to be reserved or a beam that needs to be amplitude-restricted or even deleted. For example, a first value is 0. To be specific, amplitude restriction is performed on a projection coefficient of a beam corresponding to 0 in the bit map. A second value is 1. To be specific, the projection coefficient of the beam corresponding to 0 in the bit map is reserved.

As an optional implementation, the selection information of the first beam includes at least one of the following:

third information, for indicating that the amplitude of the projection coefficient corresponding to the first beam is restricted; and

fourth information, for indicating that the amplitude of the projection coefficient corresponding to the first beam is unrestricted to be less than a preset threshold.

In an implementation, in a case that the selection information of the first beam includes third information, the network side device may indicate which beams are to be subjected to amplitude restriction. In this case, a maximum projection coefficient amplitude may be agreed upon in a protocol, so as to restrict the amplitude of the projection coefficient, indicated by the network side device, of the first beam to be less than or equal to the maximum projection coefficient amplitude.

In another implementation, in a case that the selection information of the first beam includes fourth information, the network side device may indicate which beams to be subjected to amplitude restriction and how to perform restriction. For example, the amplitude of the projection coefficient of the first beam is restricted to be less than 0.5, 0.25, or 1.

Optionally, the preset threshold may be equal to or close to 0. In this case, the amplitude of the projection coefficient of the first beam may be set to zero or restricted to be close to 0.

It should be noted that, in a case that there are at least two first beams, amplitude restriction degrees of different first beams may be different. To be specific, the fourth information may indicate that an amplitude of a projection coefficient corresponding to each first beam is less than a respective preset threshold.

As an optional implementation, the amplitude restriction information includes at least one of the following:

amplitude information of the first beam; and

first restriction information, where the first restriction information includes an amplitude restriction related to the first beam in the first channel information.

Optionally, the amplitude information of the first beam includes at least one of the following:

a maximum projection coefficient amplitude of the first beam; and

a projection coefficient amplitude ratio of the first beam.

In an implementation, in a case that the amplitude information of the first beam includes a maximum projection coefficient amplitude of the first beam, the amplitude of the projection coefficient of the first beam is less than or equal to the maximum projection coefficient amplitude. For example, assuming that the maximum projection coefficient amplitude is 0.5 and the amplitude of the projection coefficient of the first beam is 1, the amplitude of the projection coefficient of the first beam is adjusted to 0.5. For another example, assuming that the maximum projection coefficient amplitude is 0.5 and the amplitude of the projection coefficient of the first beam is 0.4, the amplitude of the projection coefficient of the first beam remains unchanged as 0.4.

In another implementation, in a case that the amplitude information of the first beam includes a projection coefficient amplitude ratio of the first beam, the amplitude of the projection coefficient of the first beam is adjusted to a product of the amplitude of the projection coefficient of the first beam and the projection coefficient amplitude ratio. For example, assuming that the maximum projection coefficient amplitude is 0.5 and the amplitude of the projection coefficient of the first beam is 1, the amplitude of the projection coefficient of the first beam is adjusted to $1 \times 0.5 = 0.5$.

In an implementation, the first restriction information may be used for restricting the amplitude of the projection coefficient of the first beam.

Optionally, the first restriction information indicates at least one of the following:

$$\text{satisfying Formula } |f^H \times W| = 0;$$

and

$$\text{satisfying Formula } |f^H \times W| \leq p,$$

where $|x|$ represents an amplitude of a vector x, f represents a vector of the first beam, $f^H$ represents a conjugate transpose of the vector of the first beam, W represents the second channel information, and p represents a restricted maximum amplitude value.

In this implementation, for a precoding matrix (precoding matrix) W that needs to be reported by a terminal and for a beam vector (beam vector) f of a specified first beam, the foregoing formula $|f^H \times W| = 0$ may be used, and an amplitude of a projection coefficient of the first beam is set to zero. Alternatively, the foregoing formula $|f^H \times W| \leq p$ may be used, and the amplitude of the projection coefficient of the first beam is restricted to be less than or equal to p.

In an implementation, the power restriction information includes:

second restriction information, where the second restriction information includes a power restriction related to the first beam in the first channel information.

In this implementation, the power of the first beam may be restricted based on the second restriction information. In this case, the first beam may be an orthogonal beam, or may be a non-orthogonal beam.

Optionally, the second restriction information indicates at least one of the following:

$$\text{satisfying Formula } |f^H \times W|^2 = 0;$$

and

$$\text{satisfying Formula } |f^H \times W|^2 \leq q,$$

where $|x|$ represents an amplitude of a vector x, f represents a vector of the first beam, $f^H$ represents a conjugate transpose of the vector of the first beam, W represents the second channel information, and q represents a restricted maximum power value.

In this implementation, for a precoding matrix (precoding matrix) W that needs to be reported by a terminal and for a beam vector (beam vector) f of a specified first beam, the foregoing formula $|f^H \times W|^2 = 0$ may be used, and power of a projection coefficient of the first beam is set to zero. Alternatively, the foregoing formula $|f^H \times W|^2 \leq q$ may be used, and the power of the projection coefficient of the first beam is restricted to be less than or equal to q.

As an optional implementation, in a case that there are at least two first beams, the second channel information satisfies at least one of the following:

an amplitude of a second projection coefficient of each first beam separately satisfies the first restriction information;
a power of each first beam separately satisfies the second restriction information;
amplitudes of second projection coefficients of the at least two first beams satisfy the first restriction information;
powers of the at least two first beams satisfy the second restriction information;
a maximum power of the at least two first beams satisfies the second restriction information; and

an average power of the at least two first beams satisfies the second restriction information.

In this implementation, in a case that there are at least two first beams, an amplitude or a coefficient of each first beam may be separately restricted based on the first restriction information or the second restriction information. For example, power of a projection coefficient of each first beam is independently restricted based on the power restriction information.

Alternatively, all the first beams may be used as a whole, and amplitudes or coefficients of all the first beams may be separately restricted based on the first restriction information or the second restriction information. For example, all the first beams are used as a whole, so that a maximum power or average power of all the first beams satisfies the power restriction information.

As an optional implementation, the method further includes:
The terminal performs second processing on the second channel information based on a first AI unit, to obtain target channel feature information.

The terminal transmits second information to the network side device, where the second information is information related to the target channel feature information.

In an implementation, the second processing may include at least one of processing such as compression, encoding, quantization, and normalization. For ease of description, in this embodiment of this application, an example in which the second processing is encoding processing is usually used for description. This is not specifically limited herein.

In an implementation, the second information may be CSI that is carried in a CSI report and reported to the network side device.

In this implementation, second channel information subjected to first processing is encoded based on a first AI unit, so that related information of a first beam in encoded target channel feature information may be restricted. For example, an amplitude or power of a projection coefficient of the first beam is restricted. In this way, in a case that the network side device performs third processing on the target channel feature information based on a second AI unit, to obtain recovered second channel information, strength of a first beam in the second channel information is lower than strength of a first beam in first channel information. In this way, the network side device preferentially selects a beam having relatively high strength to radiate power, thereby excluding power radiation on the first beam.

It should be noted that the third processing performed by the network side device based on the second AI unit may be inverse processing of the second processing. For example, the third processing may include at least one of processing such as decompression, decoding, and dequantization.

In an implementation, the foregoing processing process in which the terminal performs first processing on first channel information based on the first information, to obtain second channel information may be agreed upon in a protocol. In this case, each beam corresponding to the first channel information is determined. To be specific, at least one DFT beam for projection is determined. In this case, the first information has the following cases.

1) The first information includes beam selection information or amplitude restriction information of the first beam.

The beam selection information may indicate which beams may be reserved or which beams need to be deleted. A projection of the second channel information on a to-be-deleted beam is 0.

The amplitude restriction information may indicate a maximum projection coefficient amplitude on a selected beam, for example, 0, 0.25, 0.5, or 1.

2) For a DFT beam, the first information may include at least one of the following information:

at least one of N1, N2, O1, and O2 indicated by the base station, where N1 and N2 represent beam indexes in a horizontal or vertical direction, and O1 and O2 represent rotation factors in the horizontal or vertical direction;
a direction or an index indicated by the base station, where the terminal generates an orthogonal basis corresponding to the first beam according to the direction or the index based on a preset rule; and
a bitmap indicated by the base station, representing which beams may be reserved and which beams need to be deleted (e.g., "1" in the bitmap represents reservation, and "0" indicates deletion).

In another implementation, the foregoing processing process in which the terminal performs first processing on first channel information based on the first information, to obtain second channel information may not be agreed upon in a protocol. In this case, the first information has the following cases.

1) The first beam is a preset beam, and may not be a DFT beam. In this case, the first information may include at least one of the following information:

a candidate set of beams configured by the base station, where an ID of a first beam is indicated by using the first information, and the terminal obtains, by table look-up, a beam vector (beam vector) corresponding to the first beam according to the ID of the first beam; and

a candidate set of beams agreed upon in a protocol, where the base station indicates an ID of a first beam by using the first information.

2) The first beam is a DFT beam. In this case, the first information may include at least one of the following information:

at least one of N1, N2, O1, and O2 indicated by the base station, where N1 and N2 represent beam indexes in a horizontal or vertical direction, and O1 and O2 represent rotation factors in the horizontal or vertical direction; a direction or an index indicated by the base station, where the terminal generates an orthogonal basis corresponding to the first beam according to the direction or the index based on a preset rule; and

3) The first indication information indicates first restriction information or second restriction information on the first beam:

The first restriction information indicates at least one of the following:

$$\text{satisfying Formula } |f^{H} \times W| = 0;$$

and

$$\text{satisfying Formula } |f^{H} \times W| \le p,$$

where $|x|$ represents an amplitude of a vector $x$, $f$ represents a vector of the first beam, $f^{H}$ represents a conjugate transpose of the vector of the first beam, $W$ represents the second channel information, and $p$ represents a restricted maximum amplitude value.

The second restriction information indicates at least one of the following:

$$\text{satisfying Formula } |f^{H} \times W|^{2} = 0;$$

and

$$\text{satisfying Formula } |f^{H} \times W|^{2} \le q,$$

where $|x|$ represents an amplitude of a vector $x$, $f$ represents a vector of the first beam, $f^{H}$ represents a conjugate transpose of the vector of the first beam, $W$ represents the second channel information, and $q$ represents a restricted maximum power value.

4) In a case that there are at least two first beams, the first information is used for independently restricting power or amplitude of a projection coefficient on each first beam. Alternatively, the first information is used for restricting a maximum power, an average power, a maximum amplitude, or an average amplitude of projection coefficients on all the first beams.

As an optional implementation, that the terminal transmits second information to the network side device includes:

The terminal transmits second information to the network side device based on a physical uplink shared channel (PUSCH) resource.

The method further includes:

The terminal receives first configuration information from the network side device, where the first configuration information is used for configuring the terminal to report a time domain position or a slot offset of the second information.

Optionally, the first configuration information is used for configuring any one of the following:

a first slot offset, where the first slot offset is a slot offset when the terminal does not perform the first processing, or the first slot offset is a slot offset when the terminal performs the first processing; and

a second slot offset and a third slot offset, where the second slot offset is a slot offset caused by the terminal performing the first processing, and the third slot offset is a slot offset when the terminal does not perform the first processing.

In an implementation, in a case that the terminal does not perform the first processing, the terminal may determine, based on a first slot offset, a time point at which the second information is reported.

In another implementation, in a case that the terminal performs the first processing, it may be agreed upon in a protocol that the first slot offset includes a delay of the first processing. In this case, a value of the first slot offset may be determined by the base station according to the delay of the first processing reported by the terminal.

In still another implementation, in a case that the terminal performs the first processing, the network side device may configure two slot offsets, where the third slot offset is a slot offset not including the first processing, the second slot offset is a slot offset of the first processing, and the terminal may determine, based on the second slot offset and the third slot offset, a time point at which the second information is reported.

It should be noted that, in a scheme of reporting channel information based on a conventional codebook, not all user equipments (User Equipment, UE) support a CBSR. However, because a CBSR operation is in a codebook calculation process of the channel information, a calculation time with a CBSR operation and a calculation time without a CBSR operation are the same.

However, in this embodiment of this application, before channel information is processed based on an AI unit, an additional operation (i.e., first processing) is further introduced to restrict amplitudes or power of at least some beams in the channel information. Therefore, a processing time with an amplitude or power restricting operation is different from a processing time without an amplitude or power restricting operation. In this embodiment of this application, an additional delay or slot offset may be further introduced for the amplitude or power restricting operation, so that the second information is transmitted on one PUSCH resource based on the delay or slot offset.

As an optional implementation, the method further includes:
The terminal transmits fifth information to the network side device, where the fifth information indicates at least one of the following:

whether the terminal requires or does not require the second slot offset to transmit the second information;
whether the terminal supports or does not support an amplitude restriction;
whether the terminal supports or does not support a partial amplitude restriction;
a maximum number of beams for first processing by the terminal in one slot; and
a maximum number of the first processing operations supported to be performed by the terminal in parallel.

In an implementation, the fifth information may be transmitted to the network side device at a capability reporting node.

In an implementation, in a case that the terminal performs the first processing, the fifth information indicates that the second slot offset is needed for the terminal to transmit the second information. In a case that the terminal does not perform the first processing, the fifth information indicates that the second slot offset is not needed for the terminal to transmit the second information.

In an implementation, that the terminal supports amplitude restriction may include that the terminal supports setting an amplitude of projection information on a selected first beam to a preset value, such as 0.

In an implementation, that the terminal supports a partial amplitude restriction may include that the terminal supports restricting the amplitude of the projection information on the selected first beam to be less than or equal to a preset value, such as 0, 0.25, 0.5, or 1.

In an implementation, in a case that there are at least two first beams, the terminal may perform first processing on channel information of the at least two first beams in parallel. For example, assuming that a quantity of first beams is 10 and a maximum number of first beams supported to be subjected to the first processing by the terminal in parallel is 5, the terminal needs to perform the first processing twice, where one round of first processing is performed on five of the ten first beams, and the other round of first processing is performed on the remaining five of the ten first beams.

In an implementation, in a case that there are at least two first beams, the terminal may perform first processing on at least one first beam in a serial manner within a slot. For example, assuming that a quantity of first beams is 4 and a maximum numbers of beams that can be subjected to first processing by the terminal in a slot is 2, the terminal needs to perform first processing on the four first beams by using two slots.

In this implementation, the terminal reports fifth information to the network side device, so that the network side device determines, based on this, whether a second slot offset is needed for the terminal to transmit second information, or determines a specific slot offset value of the second slot offset.

As an optional implementation, the second slot offset is related to at least one of the following: the fifth information, a quantity of the first beams, an amplitude quantization bit (bit) number in the first information, or whether to perform amplitude quantization adjustment on the projection coefficient of the first beam.

In an implementation, the network side device may determine the second slot offset according to at least one of the fifth information, a quantity of the first beams, an amplitude quantization bit number in the first information, or whether to perform amplitude quantization adjustment on the projection coefficient of the first beam.

In an implementation, in a case that the first processing is used for restricting the amplitude of the projection coefficient on the first beam to be less than or equal to the first threshold, the amplitude quantization bit number in the first information may include: a bit number of the first threshold. A smaller bit number of the first threshold indicates a higher speed of the first processing and a smaller offset value of the second slot offset.

In another implementation, the amplitude quantization bit numbers in the first information may further include a quantization bit number of the first channel information targeted by the first processing. For example, an amplitude of a projection coefficient of beam A is 0.25, and an amplitude of a projection coefficient of beam B is 0.2543. In this case, an amplitude quantization bit number of beam A is less than an amplitude quantization bit number of beam B. A smaller amplitude quantization bit number indicates a smaller offset value of the second slot offset.

In an implementation, in a case that the network side device transmits the first information to the terminal, to instruct the terminal to perform amplitude quantization adjustment on the first beam, the network side device may determine the second slot offset according to the fifth information reported by the terminal, the quantity of the first beams indicated in the first information, and the amplitude quantization bit number in the first information.

As an optional implementation, the method further includes:

The terminal obtains a first time point.

That the terminal transmits second information to the network side device includes:

The terminal transmits second information at the first time point.

In an implementation, the first time point may be agreed upon by a protocol.

In another implementation, the first time point may be configured or indicated by the network side device.

Optionally, that the terminal obtains a first time point includes:

The terminal receives second configuration information from the network side device, where the second configuration information is used for configuring the terminal to transmit delay information related to the second information or a delay of N symbols (N is an integer greater than or equal to 0). Alternatively, the terminal obtains a delay of M symbols agreed upon by a protocol (M is an integer greater than or equal to 0).

The terminal determines the first time point based on the second configuration information or the delay of the M symbols.

In an implementation, the network side device may configure a delay of N symbols for performing an operation related to obtaining the second information, for example, an operation of processing downlink control information (Downlink Control Information, DCI), an operation of performing channel state measurement to obtain the first channel information, or an operation of performing first processing on the first channel information.

In another implementation, the network side device may configure a delay for the terminal, so that after transmitting a CSI-RS to the terminal, the network side device receives the second information from the terminal at a particular delay interval.

In still another implementation, M symbols may be agreed upon in a protocol to be used by the terminal to perform an operation related to obtaining the second information.

In this embodiment of this application, the terminal may determine, based on a delay configured by the network side device or a delay agreed upon by a protocol, the first time point at which the second information is transmitted.

Optionally, the second configuration information is used for configuring at least one of the following:

a first delay, which is a processing delay of downlink control information DCI;

a second delay, which includes a delay of channel state measurement; and

a third delay, which is a delay of the first processing.

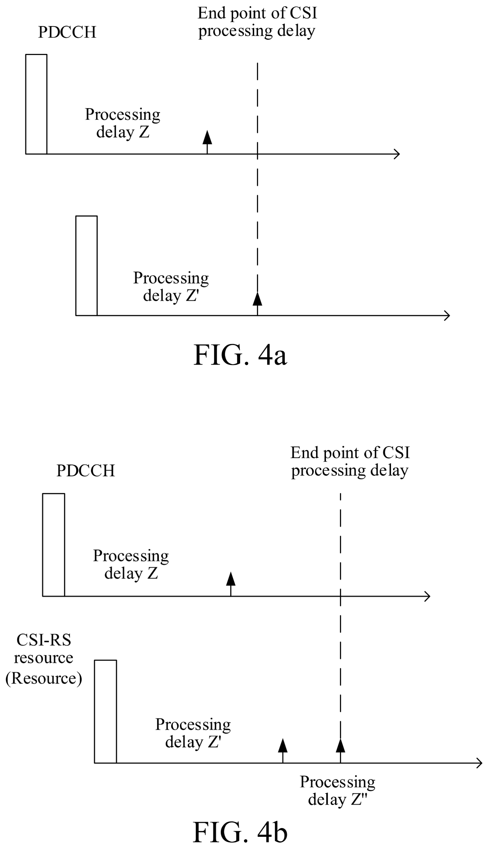

In the related art, as shown in FIG. 4a, assuming that a processing delay of DCI is Z and a delay of channel state measurement is Z', the later ending point between Z and Z' is a time point for PUSCH reporting.

In this embodiment of this application, as shown in FIG. 4b, a delay Z" of first processing is further added.

In an implementation, it may be considered that the later ending point between Z and Z" is a time point for PUSCH reporting, where a start point of Z" is an end point of Z'. To be specific, in a case that the second configuration information is used for configuring the second delay Z' and the third delay Z", a start point of the third delay Z" is an end point of the second delay Z'.

In a case that the second configuration information is used for configuring the second delay, the second delay further includes the delay of the first processing.

In another implementation, it may be considered that the later ending point between Z and Z' is a time point for PUSCH reporting, where Z' is defined as the delay of the channel state measurement + the delay of the first processing.

Optionally, the N symbols or the M symbols include at least one of the following:

a first symbol, where the first symbol is used for processing DCI;
a second symbol, where the second symbol is used for channel state measurement; and
a third symbol, where the third symbol is used for the first processing.

Similar to that the second configuration information is used for configuring at least one of the first delay, the second delay, and the third delay, the N symbols or the M symbols may include at least one of a first symbol for processing DCI, a second symbol for channel state measurement, and a third symbol for first processing. Details are not described herein again.

As an optional implementation, the first time point is in a one-to-one correspondence with a target data set, where the target data set is used for training the at least one first AI unit.

Or,

In a case that the terminal has the at least two first AI units, the first time point is in a one-to-one correspondence with the first AI units.

In an implementation, the target data set may be understood as a data set for training the first AI unit in a separate training (separate training) scene, and one target data set may train at least two first AI units. In this case, the first time point respectively corresponds to at least two first AI units trained based on the corresponding target data sets. To be specific, in a case that the terminal uses a first AI unit to perform second processing on the second channel information, a time point at which the terminal transmits the second information is the first time point corresponding to the target data set for training the first AI unit.

Optionally, the terminal may have a plurality of target data sets. Each target data set may be configured with respective first information. A specific configuration method may be pre-configuration using high layer signaling (before CSI is fed back), configuration for each CSI report (report), association with the target data set, or indication when the target data set is transmitted.

In another implementation, the first time point is in a one-to-one correspondence with the first AI unit. In this case, the first time point respectively corresponds to at least two first AI units trained based on target data sets corresponding to the at least two first AI units. To be specific, in a case that the terminal uses a first AI unit to perform second processing on the second channel information, a time point at which the terminal transmits the second information is the first time point corresponding to the first AI unit.

As an optional implementation, the first information is in a one-to-one correspondence with a target data set, where the target data set is used for training the at least one first AI unit.

In this case, when the terminal uses a first AI unit to perform the second processing, the terminal obtains first information corresponding to a target data set for training the first AI unit, and performs amplitude or power restriction on the first channel information based on the first information.

Currently, in another optional implementation, the first information may alternatively be in a one-to-one correspondence with the first AI unit. For example, the terminal has a plurality of first AI units, or each first AI unit pre-processes input information differently. In this case, when the terminal uses a first AI unit to perform the second processing, the terminal obtains first information corresponding to the first AI unit, and performs amplitude or power restriction on the first channel information based on the first information. For example, the terminal reports a delay required by each first AI unit to the network side device. Alternatively, the base station adjusts a slot offset of a CSI report based on the first AI unit used by the terminal.

In this embodiment of this application, in a case that a terminal reports channel information to a network side device based on an AI mode, the terminal may learn first information, and restrict, based on the first information, an amplitude of a projection coefficient corresponding to a first beam in first channel information, thereby implementing amplitude restriction for at least some beams of the channel information processed in the AI mode before the channel information is processed based on an AI unit. In this way, for channel information of some beams not needed for the network side, such as requirements of interference suppression or radiation management, amplitudes related to the beams in the channel feature information may be restricted. In the channel information received by the network side and recovered based on the channel feature information, amplitudes of the beams are also restricted, so as not to analyze and calculate the channel information of the beams. To be specific, complexity and a data volume of the channel feature information reported by the terminal can be reduced, thereby reducing waste of air interface resources and reducing waste of computing power of the network side.

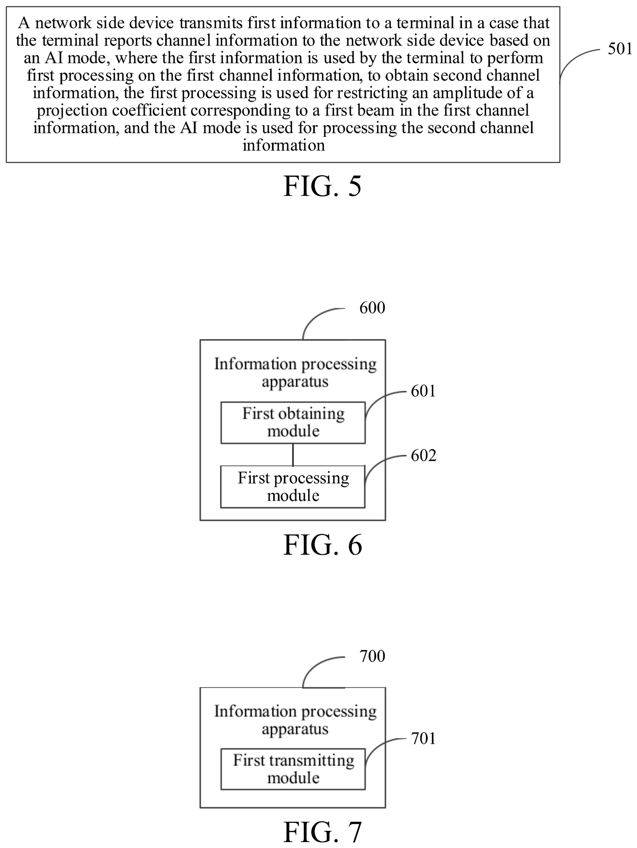

FIG. 5 shows another information processing method according to an embodiment of this application. The information processing method is performed by a network side device. The network side device may include the network side device listed in the embodiment shown in FIG. 1, or another network side device. This is not specifically limited herein.

As shown in FIG. 5, the information processing method may include the following steps.

Step 501: A network side device transmits first information to a terminal in a case that the terminal reports channel information to the network side device based on an AI mode, where the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.

During implementation, the AI mode, the first information, the first channel information, the first processing, and the second channel information respectively have the same meanings as the AI mode, the first information, the first channel information, the first processing, and the second channel information in the method embodiment shown in FIG. 3. Details are not described herein again.

In this embodiment of this application, the network side device configures or indicate first information to the terminal. Therefore, in a case that the terminal reports channel information to the network side device based on an AI mode, the terminal performs, in advance, power or amplitude restriction on a projection coefficient of the channel information on a specified beam based on the first information. In this way, after the network side device receives channel feature information from the terminal and recovers the channel information based on the second AI unit, in a process of selecting, based on the amplitude or the power of the projection coefficient, a beam that subsequently radiates power, a probability of performing power or amplitude restriction on a beam on the terminal side may be reduced.

As an optional implementation, the first information includes at least one of the following:

amplitude restriction information;
beam selection information; and
power restriction information.

As an optional implementation, the beam selection information includes at least one of the following:

selection information of the first beam;
first indication information, where the first indication information is used for indicating the first beam in a candidate beam set;
a first parameter, where the first parameter includes at least one of N1, N2, O1, and O2, the first parameter corresponds to the first beam, N1 and N2 represent beam identifiers in a horizontal or vertical direction, and O1 and O2 represent rotation factors in the horizontal or vertical direction;
information of a direction corresponding to the first beam;
identification information of a direction corresponding to the first beam; and
a bit map, where an element corresponding to the first beam in the bit map is a first value, an element corresponding to a second beam in the bit map is a second value, and the second beam includes a beam other than the first beam in the at least two DFT beams.

As an optional implementation, the selection information of the first beam includes at least one of the following:

third information, for indicating that the amplitude of the projection coefficient corresponding to the first beam is restricted; and
fourth information, for indicating that the amplitude of the projection coefficient corresponding to the first beam is unrestricted to be less than a preset threshold.

As an optional implementation, the amplitude restriction information includes at least one of the following:

amplitude information of the first beam; and
first restriction information, where the first restriction information includes an amplitude restriction related to the first beam in the first channel information.

As an optional implementation, the amplitude information of the first beam includes at least one of the following:

a maximum projection coefficient amplitude of the first beam; and
a projection coefficient amplitude ratio of the first beam.

As an optional implementation, the first restriction information indicates at least one of the following:

$$\text{satisfying Formula } |f^H \times W| = 0;$$

and

$$\text{satisfying Formula } |f^{H}\times W| \le p,$$

where |x| represents an amplitude of a vector x, f represents a vector of the first beam, $f^{H}$ represents a conjugate transpose of the vector of the first beam, W represents the second channel information, and p represents a restricted maximum amplitude value.

As an optional implementation, the power restriction information includes:

second restriction information, where the second restriction information includes a power restriction related to the first beam in the first channel information.

As an optional implementation, the second restriction information indicates at least one of the following:

$$\text{satisfying Formula } |f^{H}\times W|^{2}=0;$$

and

$$\text{satisfying Formula } |f^{H}\times W|^{2} \le q,$$

where |x| represents an amplitude of a vector x, f represents a vector of the first beam, $f^{H}$ represents a conjugate transpose of the vector of the first beam, W represents the second channel information, and q represents a restricted maximum power value.

As an optional implementation, the method further includes:

The network side device receives second information from the terminal, where the second information is information related to target channel feature information, and the target channel feature information is obtained by performing second processing on the second channel information based on a first AI unit of the terminal.

The network side device performs third processing on the target channel feature information based on a second AI unit, to obtain third channel information.

As an optional implementation, that the network side device receives second information from the terminal includes:

The network side device receives second information from the terminal based on a PUSCH resource.

The method further includes:

The network side device transmits first configuration information to the terminal, where the first configuration information is used for configuring the terminal to report a time domain position or a slot offset of the second information.

As an optional implementation, the first configuration information is used for configuring any one of the following:

a first slot offset, where the first slot offset is a slot offset when the terminal does not perform the first processing, or the first slot offset is a slot offset when the terminal performs the first processing; and

a second slot offset and a third slot offset, where the second slot offset is a slot offset caused by the terminal performing the first processing, and the third slot offset is a slot offset when the terminal does not perform the first processing.

As an optional implementation, the method further includes:

The network side device receives fifth information from the terminal, where the fifth information indicates at least one of the following:

whether the terminal requires or does not require the second slot offset to transmit the second information;

whether the terminal supports or does not support an amplitude restriction;

whether the terminal supports or does not support a partial amplitude restriction;

a maximum number of beams for first processing by the terminal in one slot; and

a maximum number of the first processing operations supported to be performed by the terminal in parallel.

In this implementation, the network side device may determine, according to fifth information reported by the terminal, a delay required by the terminal for obtaining second information, so as to receive the second information at a time point at which the terminal reports the second information. In addition, the network side device may further configure or indicate, based on this, a delay or a slot offset at which the terminal reports the second information, so that after completing calculation of the second information, the terminal can report the second information on one PUSCH resource based on the delay or the slot offset.

As an optional implementation, the method further includes:

The network side device determines the second slot offset based on sixth information, or determines to configure or not configure the second slot offset, where the sixth information includes at least one of the following:

the fifth information;
a quantity of the first beams;
an amplitude quantization bit number in the first information; and
whether the terminal performs amplitude quantization adjustment on the projection coefficient of the first beam.

As an optional implementation, the method further includes:

The network side device obtains a first time point.

That the network side device receives second information from the terminal includes:

The network side device receives second information from the terminal at the first time point.

The first time point includes one of the following:

a time point determined based on delay information related to the second information; and
a time point determined based on a delay of M symbols agreed upon by a protocol, where M is an integer greater than or equal to 0.

As an optional implementation, the method further includes:

The network side device transmits second configuration information to the terminal, where the second configuration information is used for configuring the terminal to transmit the delay information related to the second information or the delay of N symbols (N is an integer greater than or equal to 0).

As an optional implementation, the second configuration information is used for configuring at least one of the following:

a first delay, which is a processing delay of downlink control information DCI;
a second delay, which includes a delay of channel state measurement; and
a third delay, which is a delay of the first processing.

As an optional implementation, in a case that the second configuration information is used for configuring the second delay and the third delay, a start point of the third delay is an end point of the second delay.

In a case that the second configuration information is used for configuring the second delay, the second delay further includes the delay of the first processing.

As an optional implementation, the N symbols the N symbols or the M symbols include at least one of the following:

a first symbol, where the first symbol is used for processing DCI;
a second symbol, where the second symbol is used for channel state measurement; and
a third symbol, where the third symbol is used for the first processing.

In this embodiment of this application, the network side device may configure or indicate first information to the terminal. Therefore, in a case that the terminal reports channel information to the network side device based on an AI mode, the terminal performs, in advance, power or amplitude restriction on a projection coefficient of the channel information on a specified beam based on the first information. This has a beneficial effect similar to that in the method embodiment shown in FIG. 3. To avoid repetition, details are not described herein again.

The information processing method provided in an embodiment of this application may be performed by an information processing apparatus. In an embodiment of this application, an example in which the information processing apparatus performs the information processing method is used to explain the information processing apparatus provided in this embodiment of this application.

With reference to FIG. 6, an information processing apparatus 600 according to an embodiment of this application may be an apparatus in a terminal. As shown in FIG. 6, the information processing apparatus 600 may include the following modules:

a first obtaining module 601, configured to obtain first information in a case that a terminal reports channel information to a network side device based on an AI mode; and
a first processing module 602, configured to perform first processing on first channel information based on the first information, to obtain second channel information, where the first processing is used for restricting an amplitude of a projection coefficient corresponding to a first beam in the first channel information, the AI mode is used for processing the second channel information, and the first information is related to at least one of the first beam and the first processing.

Optionally, the first information includes at least one of the following:

amplitude restriction information;
beam selection information; and
power restriction information.

Optionally, the first processing module 602 includes:

a projection unit, configured to project the first channel information to at least one discrete Fourier transform (DFT) beam, to obtain a first projection coefficient of the at least one DFT beam;
a restriction unit, configured to restrict an amplitude of a first projection coefficient of the first beam based on the first information, to obtain a second projection coefficient of the at least one DFT beam, where the at least one DFT beam includes the first beam; and
a first determining unit, configured to determine second channel information based on the at least one DFT beam and the second projection coefficient.

Optionally, the restriction unit is specifically configured to perform at least one of the following:

setting the amplitude of the first projection coefficient of the first beam to zero based on the first information;
restricting the amplitude of the first projection coefficient of the first beam below a maximum projection coefficient amplitude based on the first information, where the first information includes the maximum projection coefficient amplitude; and
adjusting the amplitude of the first projection coefficient of the first beam to a product of the amplitude of the first projection coefficient and a projection coefficient amplitude ratio based on the first information, where the first information includes the projection coefficient amplitude ratio.

Optionally, the beam selection information includes at least one of the following:

selection information of the first beam;
first indication information, where the first indication information is used for indicating the first beam in a candidate beam set;
a first parameter, where the first parameter includes at least one of N1, N2, O1, and O2, the first parameter corresponds to the first beam, N1 and N2 represent beam identifiers in a horizontal or vertical direction, and O1 and O2 represent rotation factors in the horizontal or vertical direction;
information of a direction corresponding to the first beam;
identification information of a direction corresponding to the first beam; and
a bit map, where an element corresponding to the first beam in the bit map is a first value, an element corresponding to a second beam in the bit map is a second value, and the second beam includes a beam other than the first beam in the at least two DFT beams.

Optionally, the selection information of the first beam includes at least one of the following:

third information, for indicating that the amplitude of the projection coefficient corresponding to the first beam is restricted; and
fourth information, for indicating that the amplitude of the projection coefficient corresponding to the first beam is unrestricted to be less than a preset threshold.

Optionally, in a case that the first information includes information of a direction corresponding to the first beam or identification information of a direction corresponding to the first beam, the information processing apparatus 600 further includes:

a generation module, configured to generate an orthogonal basis in a first direction according to a preset rule, where the orthogonal basis corresponds to the first beam, and the first direction is a direction corresponding to information of a direction corresponding to the first beam or a direction corresponding to identification information of a direction corresponding to the first beam.

Optionally, the amplitude restriction information includes at least one of the following:

amplitude information of the first beam; and
first restriction information, where the first restriction information includes an amplitude restriction related to the first beam in the first channel information.

Optionally, the amplitude information of the first beam includes at least one of the following:

a maximum projection coefficient amplitude of the first beam; and
a projection coefficient amplitude ratio of the first beam.

Optionally, the first restriction information indicates at least one of the following:

$$\text{satisfying Formula } |f^H \times W| = 0;$$

and

$$\text{satisfying Formula } |f^H \times W| \leq p,$$

where $|x|$ represents an amplitude of a vector $x$, $f$ represents a vector of the first beam, $f^H$ represents a conjugate transpose of the vector of the first beam, $W$ represents the second channel information, and $p$ represents a restricted maximum amplitude value.

Optionally, the power restriction information includes:
second restriction information, where the second restriction information includes a power restriction related to the first beam in the first channel information.

Optionally, the second restriction information indicates at least one of the following:

$$\text{satisfying Formula } |f^H \times W|^2 = 0;$$

and

$$\text{satisfying Formula } |f^H \times W|^2 \leq q,$$

where $|x|$ represents an amplitude of a vector $x$, $f$ represents a vector of the first beam, $f^H$ represents a conjugate transpose of the vector of the first beam, $W$ represents the second channel information, and $q$ represents a restricted maximum power value.

Optionally, in a case that there are at least two first beams, the second channel information satisfies at least one of the following:

an amplitude of a second projection coefficient of each first beam separately satisfies the first restriction information;
a power of each first beam separately satisfies the second restriction information;
amplitudes of second projection coefficients of the at least two first beams satisfy the first restriction information;
powers of the at least two first beams satisfy the second restriction information;
a maximum power of the at least two first beams satisfies the second restriction information; and
an average power of the at least two first beams satisfies the second restriction information.

Optionally, the information processing apparatus 600 further includes:

a second processing module, configured to perform second processing on the second channel information based on a first AI unit, to obtain target channel feature information; and
a second transmitting module, configured to transmit second information to the network side device, where the second information is information related to the target channel feature information.

Optionally, the second transmitting module is specifically configured to:
transmit second information to the network side device based on a PUSCH resource.

The information processing apparatus 600 further includes:
a first receiving module, configured to receive first configuration information from the network side device, where the first configuration information is used for configuring the terminal to report a time domain position or a slot offset of the second information.

Optionally, the first configuration information is used for configuring any one of the following:

a first slot offset, where the first slot offset is a slot offset when the terminal does not perform the first processing, or the first slot offset is a slot offset when the terminal performs the first processing; and
a second slot offset and a third slot offset, where the second slot offset is a slot offset caused by the terminal performing the first processing, and the third slot offset is a slot offset when the terminal does not perform the first processing.

Optionally, the information processing apparatus 600 further includes:

a third transmitting module, configured to transmit fifth information to the network side device, where the fifth information indicates at least one of the following:
whether the terminal requires or does not require the second slot offset to transmit the second information;
whether the terminal supports or does not support an amplitude restriction;
whether the terminal supports or does not support a partial amplitude restriction;
a maximum number of beams for first processing by the terminal in one slot; and
a maximum number of the first processing operations supported to be performed by the terminal in parallel.

Optionally, the second slot offset is related to at least one of the following: the fifth information, a quantity of the first beams, an amplitude quantization bit number in the first information, or whether to perform amplitude quantization adjustment on the projection coefficient of the first beam.

Optionally, the information processing apparatus 600 further includes:
a second obtaining module, configured to obtain a first time point.

The second transmitting module is specifically configured to:
transmitting second information at the first time point.

Optionally, the second obtaining module includes:

a first receiving unit or an obtaining unit, where the first receiving unit is configured to receive second configuration information from the network side device, the second configuration information is used for configuring the terminal to transmit delay information related to the second information or a delay of N symbols (N is an integer greater than or equal to 0), and the obtaining unit is configured to obtain a delay of M symbols agreed upon by a protocol (M is an integer greater than or equal to 0); and
a second determining unit, configured to determine the first time point based on the second configuration information or the delay of the M symbols.

Optionally, the second configuration information is used for configuring at least one of the following:

a first delay, which is a processing delay of downlink control information DCI;
a second delay, which includes a delay of channel state measurement; and
a third delay, which is a delay of the first processing.

Optionally, in a case that the second configuration information is used for configuring the second delay and the third delay, a start point of the third delay is an end point of the second delay.

In a case that the second configuration information is used for configuring the second delay, the second delay further includes the delay of the first processing.

Optionally, the N symbols or the M symbols include at least one of the following:

a first symbol, where the first symbol is used for processing DCI;
a second symbol, where the second symbol is used for channel state measurement; and
a third symbol, where the third symbol is used for the first processing.

Optionally, the first time point is in a one-to-one correspondence with a target data set, and the target data set is used for training the at least one first AI unit.

Or,

In a case that the terminal has the at least two first AI units, the first time point is in a one-to-one correspondence with the first AI units.

Optionally, the first information is in a one-to-one correspondence with a target data set, and the target data set is used for training the at least one first AI unit.

Optionally, the first channel information includes one of the following:

channel information of a sub-band; and
channel information of a layer (layer).

The information processing apparatus 600 in this embodiment of this application may be an electronic device, for example, an electronic device with an operating system, or may be a component in an electronic device, for example, an integrated circuit or chip. The electronic device may be a terminal. For example, the terminal may include, but is not limited to, types of the terminal 11 listed above. This is not specifically limited in this embodiment of this application.

The information processing apparatus 600 provided in this embodiment of this application can implement processes implemented in the method embodiments of FIG. 3, and the same technical effect can be achieved. To avoid repetition, details are not described herein.

With reference to FIG. 7, another information processing apparatus according to an embodiment of this application may be an apparatus in a network side device. As shown in FIG. 7, the information processing apparatus 700 may include the following modules:

a first transmitting module 701, configured to transmit first information to a terminal in a case that the terminal reports channel information to a network side device based on an AI mode, where the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.

Optionally, the first information includes at least one of the following:

amplitude restriction information;
beam selection information; and
power restriction information.

Optionally, the beam selection information includes at least one of the following:

selection information of the first beam;
first indication information, where the first indication information is used for indicating the first beam in a candidate beam set;
a first parameter, where the first parameter includes at least one of N1, N2, O1, and O2, the first parameter corresponds to the first beam, N1 and N2 represent beam identifiers in a horizontal or vertical direction, and O1 and O2 represent rotation factors in the horizontal or vertical direction;
information of a direction corresponding to the first beam;
identification information of a direction corresponding to the first beam; and
a bit map, where an element corresponding to the first beam in the bit map is a first value, an element corresponding to a second beam in the bit map is a second value, and the second beam includes a beam other than the first beam in the at least two DFT beams.

Optionally, the selection information of the first beam includes at least one of the following:

third information, for indicating that the amplitude of the projection coefficient corresponding to the first beam is restricted; and
fourth information, for indicating that the amplitude of the projection coefficient corresponding to the first beam is unrestricted to be less than a preset threshold.

Optionally, the amplitude restriction information includes at least one of the following:

amplitude information of the first beam; and

first restriction information, where the first restriction information includes an amplitude restriction related to the first beam in the first channel information.

Optionally, the amplitude information of the first beam includes at least one of the following:

a maximum projection coefficient amplitude of the first beam; and
a projection coefficient amplitude ratio of the first beam.

Optionally, the first restriction information indicates at least one of the following:

$$\text{satisfying Formula } |f^H \times W| = 0;$$

and

$$\text{satisfying Formula } |f^H \times W| \leq p,$$

where $|x|$ represents an amplitude of a vector x, f represents a vector of the first beam, $f^H$ represents a conjugate transpose of the vector of the first beam, W represents the second channel information, and p represents a restricted maximum amplitude value.
Optionally, the power restriction information includes:
second restriction information, where the second restriction information includes a power restriction related to the first beam in the first channel information.
Optionally, the second restriction information indicates at least one of the following:

$$\text{satisfying Formula } |f^H \times W|^2 = 0;$$

and

$$\text{satisfying Formula } |f^H \times W|^2 \leq q,$$

where $|x|$ represents an amplitude of a vector x, f represents a vector of the first beam, $f^H$ represents a conjugate transpose of the vector of the first beam, W represents the second channel information, and q represents a restricted maximum power value.
Optionally, the information processing apparatus 700 further includes:

a second receiving module, configured to receive second information from the terminal, where the second information is information related to target channel feature information, and the target channel feature information is obtained by performing second processing on the second channel information based on a first AI unit of the terminal; and
a third processing module, configured to perform third processing on the target channel feature information based on a second AI unit, to obtain third channel information.

Optionally, the second receiving module is specifically configured to receive second information from the terminal based on a PUSCH resource.
The information processing apparatus 700 further includes:
a fourth transmitting module, configured to transmit first configuration information to the terminal, where the first configuration information is used for configuring the terminal to report a time domain position or a slot offset of the second information.
Optionally, the first configuration information is used for configuring any one of the following:

a first slot offset, where the first slot offset is a slot offset when the terminal does not perform the first processing, or the first slot offset is a slot offset when the terminal performs the first processing; and
a second slot offset and a third slot offset, where the second slot offset is a slot offset caused by the terminal performing the first processing, and the third slot offset is a slot offset when the terminal does not perform the first processing.

Optionally, the information processing apparatus 700 further includes:
a third receiving module, configured to receive fifth information from the terminal, where the fifth information indicates at least one of the following:

whether the terminal requires or does not require the second slot offset to transmit the second information;
whether the terminal supports or does not support an amplitude restriction;
whether the terminal supports or does not support a partial amplitude restriction;
a maximum number of beams for first processing by the terminal in one slot; and
a maximum number of the first processing operations supported to be performed by the terminal in parallel.

Optionally, the information processing apparatus 700 further includes:
a determining module, configured to determine the second slot offset based on sixth information, or determine to configure or not configure the second slot offset, where the sixth information includes at least one of the following:

the fifth information;
a quantity of the first beams;
an amplitude quantization bit number in the first information; and
whether the terminal performs amplitude quantization adjustment on the projection coefficient of the first beam.

Optionally, the information processing apparatus 700 further includes:
a third obtaining module, configured to obtain a first time point.
The second receiving module is specifically configured to:
receive second information from the terminal at the first time point.
The first time point includes one of the following:

a time point determined based on delay information related to the second information; and
a time point determined based on a delay of M symbols agreed upon by a protocol, where M is an integer greater than or equal to 0.

Optionally, the information processing apparatus 700 further includes:
a fifth transmitting module, configured to transmit second configuration information to the terminal, where the second configuration information is used for configuring the terminal to transmit the delay information related to the second information or the delay of N symbols (N is an integer greater than or equal to 0).
Optionally, the second configuration information is used for configuring at least one of the following:

a first delay, which is a processing delay of downlink control information DCI;
a second delay, which includes a delay of channel state measurement; and
a third delay, which is a delay of the first processing.

Optionally, in a case that the second configuration information is used for configuring the second delay and the third delay, a start point of the third delay is an end point of the second delay.
In a case that the second configuration information is used for configuring the second delay, the second delay further includes the delay of the first processing.
Optionally, the N symbols the N symbols or the M symbols include at least one of the following:

a first symbol, where the first symbol is used for processing DCI;
a second symbol, where the second symbol is used for channel state measurement; and
a third symbol, where the third symbol is used for the first processing.

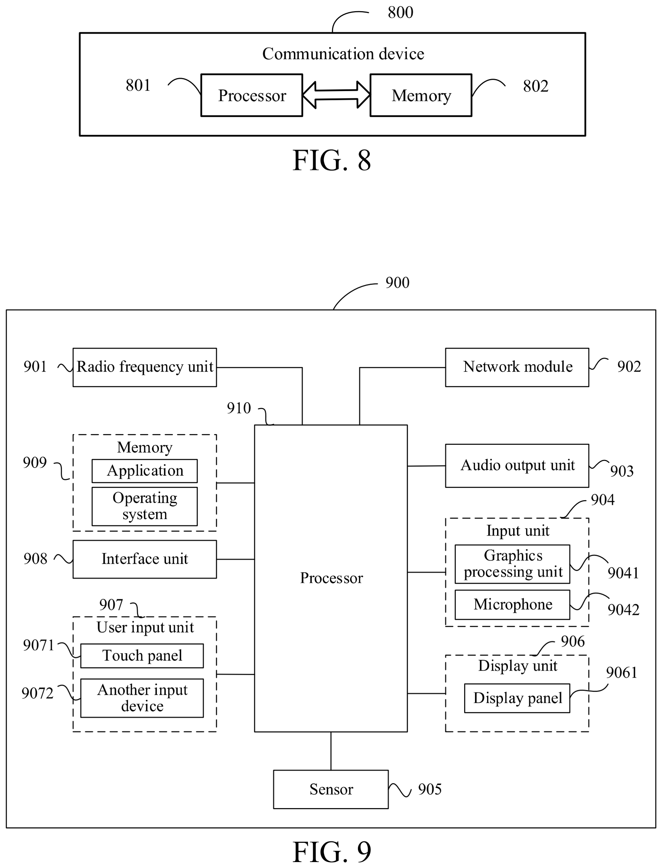

The information processing apparatus 700 provided in this embodiment of this application can implement processes implemented in the method embodiments of FIG. 5, and the same technical effect can be achieved. To avoid repetition, details are not described herein.
As shown in FIG. 8, an embodiment of this application further provides a communication device 800, including a processor 801 and a memory 802. The memory 802 stores a program or an instruction executable on the processor 801. For example, in a case that the communication device 800 is a terminal, the program or the instruction, when executed by the processor 801, implements the steps of the information processing method embodiment shown in FIG. 3, and the same technical effect can be achieved. In a case that the communication device 800 is a first device, the program or the instruction, when executed by the processor 801, implements the steps of the information processing method embodiment shown in FIG. 5, and the same technical effect can be achieved. To avoid repetition, details are not described herein again.

An embodiment of this application further provides a terminal, including a processor and a communication interface. The communication interface is coupled to the processor. The processor is configured to execute a program or an instruction, to implement the steps in the method embodiment shown in FIG. 3. The terminal embodiment corresponds to the foregoing method embodiment on a terminal side. Implementation processes and implementations of the foregoing method embodiment all may be applied to the terminal embodiment, and the same technical effect can be achieved. Specifically, FIG. 9 is a schematic diagram of a hardware structure of a terminal for implementing an embodiment of this application.

The terminal 900 includes, but is not limited to, at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (e.g., a battery) that supplies power to the components. The power supply may be logically connected to the processor 910 by using a power management system, thereby implementing functions such as management of charging, discharging, and power consumption by using the power management system. The terminal structure shown in FIG. 9 constitutes no limitation on the terminal. The terminal may include more or fewer components than those shown in the figure, or some merged components, or different component arrangements. Details are not described herein.

It should be understood that, in this embodiment of this application, the input unit 904 may include a graphics processing unit (Graphics Processing Unit, GPU) 9041 and a microphone 9042. The graphics processing unit 9041 performs processing on image data of a static picture or a video that is obtained by an image acquisition apparatus (e.g., a camera) in a video acquisition mode or an image acquisition mode. The display unit 906 may include a display panel 9061. The display panel 9061 may be configured by using a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional key (e.g., a volume control key or a switch key), a track ball, a mouse, and a joystick. Details are not described herein again.

In this embodiment of this application, the radio frequency unit 901 receives downlink data from a network side device and may then transmit the data to the processor 910 for processing. In addition, the radio frequency unit 901 may transmit uplink data to the network side device. Generally, the radio frequency unit 901 includes, but is not limited to, an antenna, an amplifier, a transceiver, a coupler, a low noise amplifier, a duplexer, and the like.

The memory 909 may be configured to store a software program or instruction and various data. The memory 909 may mainly include a first storage region storing the program or instruction and a second storage region storing the data. The first storage region may store an operating system, an application or instruction required by at least one function (e.g., a sound playback function and an image display function), and the like. Furthermore, the memory 909 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 909 in this embodiment of this application includes, but is not limited to, these memories and any other memory of a suitable type.

The processor 910 may include one or more processing units. Optionally, the processor 910 integrates an application processor and a modem processor. The application processor mainly processes operations related to an operating system, a user interface, an application, and the like. The modem processor mainly processes wireless communication signals, and is, for example, a baseband processor. It may be understood that the foregoing modem may not be integrated into the processor 910.

The radio frequency unit 901 is configured to obtain first information in a case that a terminal reports channel information to a network side device based on an AI mode.

The processor 910 is configured to perform first processing on first channel information based on the first information, to obtain second channel information, where the first processing is used for restricting an amplitude of a projection coefficient corresponding to a first beam in the first channel information, the AI mode is used for processing the second channel information, and the first information is related to at least one of the first beam and the first processing.

Optionally, the first information includes at least one of the following:

amplitude restriction information;
beam selection information; and
power restriction information.

Optionally, the performing, by the processor 910, first processing on first channel information based on the first information, to obtain second channel information includes:

projecting the first channel information to at least one discrete Fourier transform (DFT) beam, to obtain a first projection coefficient of the at least one DFT beam;
restricting an amplitude of a first projection coefficient of the first beam based on the first information, to obtain a second projection coefficient of the at least one DFT beam, where the at least one DFT beam includes the first beam; and
determining second channel information based on the at least one DFT beam and the second projection coefficient.

Optionally, the restricting, by the processor 910, an amplitude of a first projection coefficient of the first beam based on the first information includes at least one of the following:

setting the amplitude of the first projection coefficient of the first beam to zero based on the first information;
restricting the amplitude of the first projection coefficient of the first beam below a maximum projection coefficient amplitude based on the first information, where the first information includes the maximum projection coefficient amplitude; and
adjusting the amplitude of the first projection coefficient of the first beam to a product of the amplitude of the first projection coefficient and a projection coefficient amplitude ratio based on the first information, where the first information includes the projection coefficient amplitude ratio.

Optionally, the beam selection information includes at least one of the following:

selection information of the first beam;
first indication information, where the first indication information is used for indicating the first beam in a candidate beam set;
a first parameter, where the first parameter includes at least one of N1, N2, O1, and O2, the first parameter corresponds to the first beam, N1 and N2 represent beam identifiers in a horizontal or vertical direction, and O1 and O2 represent rotation factors in the horizontal or vertical direction;
information of a direction corresponding to the first beam;
identification information of a direction corresponding to the first beam; and
a bit map, where an element corresponding to the first beam in the bit map is a first value, an element corresponding to a second beam in the bit map is a second value, and the second beam includes a beam other than the first beam in the at least two DFT beams.

Optionally, the selection information of the first beam includes at least one of the following:

third information, for indicating that the amplitude of the projection coefficient corresponding to the first beam is restricted; and
fourth information, for indicating that the amplitude of the projection coefficient corresponding to the first beam is unrestricted to be less than a preset threshold.

Optionally, in a case that the first information includes information of a direction corresponding to the first beam or identification information of a direction corresponding to the first beam, the processor 910 is further configured to generate an orthogonal basis in a first direction according to a preset rule, where the orthogonal basis corresponds to the first beam, and the first direction is a direction corresponding to information of a direction corresponding to the first beam or a direction corresponding to identification information of a direction corresponding to the first beam.

Optionally, the amplitude restriction information includes at least one of the following:

amplitude information of the first beam; and
first restriction information, where the first restriction information includes an amplitude restriction related to the first beam in the first channel information.

Optionally, the amplitude information of the first beam includes at least one of the following:

a maximum projection coefficient amplitude of the first beam; and

a projection coefficient amplitude ratio of the first beam.

Optionally, the first restriction information indicates at least one of the following:

$$\text{satisfying Formula } |f^H \times W| = 0;$$

and

$$\text{satisfying Formula } |f^H \times W| \leq p,$$

where $|x|$ represents an amplitude of a vector x, f represents a vector of the first beam, $f^H$ represents a conjugate transpose of the vector of the first beam, W represents the second channel information, and p represents a restricted maximum amplitude value.

Optionally, the power restriction information includes:

second restriction information, where the second restriction information includes a power restriction related to the first beam in the first channel information.

Optionally, the second restriction information indicates at least one of the following:

$$\text{satisfying Formula } |f^H \times W|^2 = 0;$$

and

$$\text{satisfying Formula } |f^H \times W|^2 \leq q,$$

where $|x|$ represents an amplitude of a vector x, f represents a vector of the first beam, $f^H$ represents a conjugate transpose of the vector of the first beam, W represents the second channel information, and q represents a restricted maximum power value.

Optionally, in a case that there are at least two first beams, the second channel information satisfies at least one of the following:

an amplitude of a second projection coefficient of each first beam separately satisfies the first restriction information;
a power of each first beam separately satisfies the second restriction information;
amplitudes of second projection coefficients of the at least two first beams satisfy the first restriction information;
powers of the at least two first beams satisfy the second restriction information;
a maximum power of the at least two first beams satisfies the second restriction information; and
an average power of the at least two first beams satisfies the second restriction information.

Optionally, the processor 910 is further configured to perform second processing on the second channel information based on a first AI unit, to obtain target channel feature information.

The radio frequency unit 901 is further configured to transmit second information to the network side device, where the second information is information related to the target channel feature information.

Optionally, the transmitting, by the radio frequency unit 901, second information to the network side device includes:

transmitting second information to the network side device based on a PUSCH resource.

The radio frequency unit 901 is further configured to receive first configuration information from the network side device, where the first configuration information is used for configuring the terminal to report a time domain position or a slot offset of the second information.

Optionally, the first configuration information is used for configuring any one of the following:

a first slot offset, where the first slot offset is a slot offset when the terminal does not perform the first processing, or the first slot offset is a slot offset when the terminal performs the first processing; and

a second slot offset and a third slot offset, where the second slot offset is a slot offset caused by the terminal performing the first processing, and the third slot offset is a slot offset when the terminal does not perform the first processing.

Optionally, the radio frequency unit 901 is further configured to transmit fifth information to the network side device, where the fifth information indicates at least one of the following:

whether the terminal requires or does not require the second slot offset to transmit the second information;
whether the terminal supports or does not support an amplitude restriction;
whether the terminal supports or does not support a partial amplitude restriction;
a maximum number of beams for first processing by the terminal in one slot; and
a maximum number of the first processing operations supported to be performed by the terminal in parallel.

Optionally, the second slot offset is related to at least one of the following: the fifth information, a quantity of the first beams, an amplitude quantization bit number in the first information, or whether to perform amplitude quantization adjustment on the projection coefficient of the first beam.
Optionally, the radio frequency unit 901 is further configured to obtain a first time point.
That the terminal transmits second information to the network side device includes:
The terminal transmits second information at the first time point.
Optionally, the obtaining, by the radio frequency unit 901, a first time point includes:
receiving second configuration information from the network side device, where the second configuration information is used for configuring the terminal to transmit delay information related to the second information or a delay of N symbols (N is an integer greater than or equal to 0), or obtaining a delay of M symbols agreed upon by a protocol (M is an integer greater than or equal to 0).
The processor 910 is configured to determine the first time point based on the second configuration information or the delay of the M symbols.
Optionally, the second configuration information is used for configuring at least one of the following:

a first delay, which is a processing delay of downlink control information DCI;
a second delay, which includes a delay of channel state measurement; and
a third delay, which is a delay of the first processing.

Optionally, in a case that the second configuration information is used for configuring the second delay and the third delay, a start point of the third delay is an end point of the second delay.
In a case that the second configuration information is used for configuring the second delay, the second delay further includes the delay of the first processing.
Optionally, the N symbols or the M symbols include at least one of the following:

a first symbol, where the first symbol is used for processing DCI;
a second symbol, where the second symbol is used for channel state measurement; and
a third symbol, where the third symbol is used for the first processing.

Optionally, the first time point is in a one-to-one correspondence with a target data set, and the target data set is used for training the at least one first AI unit.
or,
In a case that the terminal has the at least two first AI units, the first time point is in a one-to-one correspondence with the first AI units.
Optionally, the first information is in a one-to-one correspondence with a target data set, and the target data set is used for training the at least one first AI unit.
Optionally, the first channel information includes one of the following:

channel information of a sub-band; and
channel information of a layer (layer).

It may be understood that for the implementation processes of the implementations mentioned in this embodiment, refer to related descriptions for the information processing method embodiment shown in FIG. 3, and the same or corresponding technical effect is achieved. To avoid repetition, details are not described herein again.
An embodiment of this application further provides a network side device, including a processor and a communication interface. The communication interface is coupled to the processor. The processor is configured to execute a program or an instruction, to implement the steps in the method embodiment shown in FIG. 5. The network side device embodiment corresponds to the foregoing method embodiment applied to a network side device. Implementation processes and implementations of the foregoing method embodiment all may be applied to the network side device embodiment, and the same technical effect can be achieved.

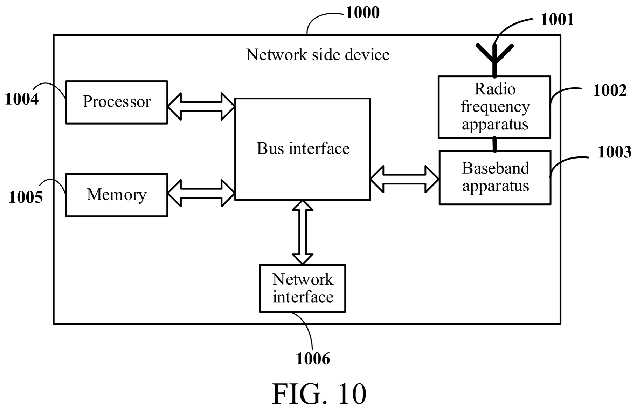

By way of example, an embodiment of this application further provides a network side device. As shown in FIG. 10, the network side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001, and transmits the received information to the baseband apparatus 1003 for processing. In a downlink direction, the baseband apparatus 1003 processes to-be-sent information, and transmits the information to the radio frequency apparatus 1002. The radio frequency apparatus 1002 processes the received information, and transmits the information via the antenna 1001.

The method performed by the network side device in the foregoing embodiment may be implemented in the baseband apparatus 1003. The baseband apparatus 1003 includes a baseband processor.

The baseband apparatus 1003 may include, for example, at least one baseband board. A plurality of chips are disposed on the baseband board. As shown in FIG. 10, one of the chips is, for example, the baseband processor, which is connected to the memory 1005 through a bus interface to invoke a program in the memory 1005 to perform the network device operations shown in the foregoing method embodiment.

The network side device may further include a network interface 1006. The interface is, for example, a common public radio interface (Common Public Radio Interface, CPRI).

Specifically, the network side device 1000 in this embodiment of this application further includes: an instruction or a program stored in the memory 1005 and executable on the processor 1004. The processor 1004 invokes the instruction or the program in the memory 1005 to perform the method performed by each module shown in FIG. 7, and the same technical effect is achieved. To avoid repetition, details are not described herein again.

An embodiment of this application further provides a readable storage medium. The readable storage medium has a program or an instruction stored therein. The program or the instruction, when executed by a processor, implements the processes of the method embodiment shown in FIG. 3 or FIG. 5, and the same technical effect can be achieved. To avoid repetition, details are not described herein again.

The processor is a processor of the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface. The communication interface is coupled to the processor. The processor is configured to execute a program or an instruction, to implement the processes of the method embodiment shown in FIG. 3 or FIG. 5, and the same technical effect can be achieved. To avoid repetition, details are not described herein again.

It should be understood that the chip mentioned in this embodiment of this application may alternatively be referred to as a system level chip, a system chip, a chip system, a system on chip, or the like.

An embodiment of this application further provides a computer program/program product. The computer program/program product is stored in a storage medium. The computer program/program product, when executed by at least one processor, implements the processes of the method embodiment shown in FIG. 3 or FIG. 5, and the same technical effect can be achieved. To avoid repetition, details are not described herein again.

An embodiment of this application further provides a communication system, including a terminal and a network side device. The terminal may be configured to perform steps of the information processing method shown in FIG. 3. The network side device may be configured to perform steps of the information processing method shown in FIG. 5.

It should be noted that in this specification, the term "include", "comprise", or any other variants thereof are intended to encompass in a non-exclusive manner, so that a process, method, object, or apparatus including a series of elements not only includes those elements, but also includes other elements that are not explicitly listed, or elements that are inherent to such a process, method, object, or apparatus. Without more limitations, an element defined by a sentence "including a ..." does not exclude a case that there are still other same elements in the process, method, object, or apparatus including the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may further be added, omitted, or combined. In addition, features described with reference to some examples may be combined in other examples.

Through the description of the foregoing implementations, a person skilled in the art may clearly understand that the methods according to the foregoing embodiments may be implemented by a computer software product running on a necessary general hardware platform, and certainly, may alternatively be implemented by hardware. The computer software product is stored in a storage medium (e.g., a ROM, a RAM, a magnetic disk, or an optical disc) and includes several instructions for instructing a terminal or a network side device to perform the methods described in the embodiments of this application.

The embodiments of this application are described above with reference to the accompanying drawings. However, this application is not limited to the foregoing specific implementations, and the foregoing specific implementations are only exemplary and not limitative. A person of ordinary skill in the art may make implementations in many forms under the teaching of this application without departing from the spirit of this application and the protection scope of the claims. These implementations fall within the protection scope of this application.

**Claims**

1.  An information processing method, comprising:

    obtaining, by a terminal, first information in a case that the terminal reports channel information to a network side device based on an AI mode; and

    performing, by the terminal, first processing on first channel information based on the first information, to obtain second channel information, wherein the first processing is used for restricting an amplitude of a projection coefficient corresponding to a first beam in the first channel information, the AI mode is used for processing the second channel information, and the first information is related to at least one of the first beam and the first processing.

2.  The method according to claim 1, wherein the first information comprises at least one of the following:

    amplitude restriction information;
    beam selection information; and
    power restriction information.

3.  The method according to claim 1 or 2, wherein the performing, by the terminal, first processing on first channel information based on the first information, to obtain second channel information comprises:

    projecting, by the terminal, the first channel information to at least one discrete Fourier transform (DFT) beam, to obtain a first projection coefficient of the at least one DFT beam;

    restricting, by the terminal, an amplitude of a first projection coefficient of the first beam based on the first information, to obtain a second projection coefficient of the at least one DFT beam, wherein the at least one DFT beam comprises the first beam; and

    determining, by the terminal, second channel information based on the at least one DFT beam and the second projection coefficient.

4.  The method according to claim 3, wherein the restricting, by the terminal, an amplitude of a first projection coefficient of the first beam based on the first information comprises at least one of the following:

    setting, by the terminal, the amplitude of the first projection coefficient of the first beam to zero based on the first information;

    restricting, by the terminal, the amplitude of the first projection coefficient of the first beam below a maximum projection coefficient amplitude based on the first information, wherein the first information comprises the maximum projection coefficient amplitude; and

    adjusting, by the terminal, the amplitude of the first projection coefficient of the first beam to a product of the amplitude of the first projection coefficient and a projection coefficient amplitude ratio based on the first information, wherein the first information comprises the projection coefficient amplitude ratio.

5.  The method according to any one of claims 2 to 4, wherein the beam selection information comprises at least one of the following:

    selection information of the first beam;
    first indication information, wherein the first indication information is used for indicating the first beam in a candidate beam set;
    a first parameter, wherein the first parameter comprises at least one of N1, N2, O1, and O2, the first parameter corresponds to the first beam, N1 and N2 represent beam identifiers in a horizontal or vertical direction, and O1 and O2 represent rotation factors in the horizontal or vertical direction;

information of a direction corresponding to the first beam;

identification information of a direction corresponding to the first beam; and

a bit map, wherein an element corresponding to the first beam in the bit map is a first value, an element corresponding to a second beam in the bit map is a second value, and the second beam comprises a beam other than the first beam in the at least two DFT beams.

6. The method according to claim 5, wherein the selection information of the first beam comprises at least one of the following:

third information, for indicating that the amplitude of the projection coefficient corresponding to the first beam is restricted; and

fourth information, for indicating that the amplitude of the projection coefficient corresponding to the first beam is unrestricted to be less than a preset threshold.

7. The method according to claim 5 or 6, wherein in a case that the first information comprises information of a direction corresponding to the first beam or identification information of a direction corresponding to the first beam, the method further comprises:

generating, by the terminal, an orthogonal basis in a first direction according to a preset rule, wherein the orthogonal basis corresponds to the first beam, and the first direction is a direction corresponding to information of a direction corresponding to the first beam or a direction corresponding to identification information of a direction corresponding to the first beam.

8. The method according to any one of claims 2 to 7, wherein the amplitude restriction information comprises at least one of the following:

amplitude information of the first beam; and

first restriction information, wherein the first restriction information comprises an amplitude restriction related to the first beam in the first channel information.

9. The method according to claim 8, wherein the amplitude information of the first beam comprises at least one of the following:

a maximum projection coefficient amplitude of the first beam; and

a projection coefficient amplitude ratio of the first beam.

10. The method according to claim 8 or 9, wherein the first restriction information indicates at least one of the following:

$$\text{satisfying Formula } |f^H \times W| = 0;$$

and

$$\text{satisfying Formula } |f^H \times W| \leq p,$$

wherein |x| represents an amplitude of a vector x, f represents a vector of the first beam, $f^H$ represents a conjugate transpose of the vector of the first beam, W represents the second channel information, and p represents a restricted maximum amplitude value.

11. The method according to any one of claims 2 to 10, wherein the power restriction information comprises:

second restriction information, wherein the second restriction information comprises a power restriction related to the first beam in the first channel information.

12. The method according to claim 11, wherein the second restriction information indicates at least one of the following:

$$\text{satisfying Formula } |f^H \times W|^2 = 0;$$

and

$$\text{satisfying Formula } |f^{H} \times W|^2 \leq q,$$

wherein $|x|$ represents an amplitude of a vector $x$, $f$ represents a vector of the first beam, $f^{H}$ represents a conjugate transpose of the vector of the first beam, $W$ represents the second channel information, and $q$ represents a restricted maximum power value.

13. The method according to any one of claims 5 to 12, wherein in a case that there are at least two first beams, the second channel information satisfies at least one of the following:

   an amplitude of a second projection coefficient of each first beam separately satisfies the first restriction information;
   a power of each first beam separately satisfies the second restriction information;
   amplitudes of second projection coefficients of the at least two first beams satisfy the first restriction information;
   powers of the at least two first beams satisfy the second restriction information;
   a maximum power of the at least two first beams satisfies the second restriction information; and
   an average power of the at least two first beams satisfies the second restriction information.

14. The method according to any one of claims 1 to 13, wherein the method further comprises:

   performing, by the terminal, second processing on the second channel information based on a first AI unit, to obtain target channel feature information; and
   transmitting, by the terminal, second information to the network side device, wherein the second information is information related to the target channel feature information.

15. The method according to claim 14, wherein the transmitting, by the terminal, second information to the network side device comprises:

   transmitting, by the terminal, second information to the network side device based on a PUSCH resource; and
   the method further comprises:
   receiving, by the terminal, first configuration information from the network side device, wherein the first configuration information is used for configuring the terminal to report a time domain position or a slot offset of the second information.

16. The method according to claim 15, wherein the first configuration information is used for configuring one of the following:

   a first slot offset, wherein the first slot offset is a slot offset when the terminal does not perform the first processing, or the first slot offset is a slot offset when the terminal performs the first processing; and
   a second slot offset and a third slot offset, wherein the second slot offset is a slot offset caused by the terminal performing the first processing, and the third slot offset is a slot offset when the terminal does not perform the first processing.

17. The method according to claim 16, wherein the method further comprises:
   transmitting, by the terminal, fifth information to the network side device, wherein the fifth information indicates at least one of the following:

   whether the terminal requires or does not require the second slot offset to transmit the second information;
   whether the terminal supports or does not support an amplitude restriction;
   whether the terminal supports or does not support a partial amplitude restriction;
   a maximum number of beams for first processing by the terminal in one slot; and
   a maximum number of the first processing operations supported to be performed by the terminal in parallel.

18. The method according to claim 16 or 17, wherein the second slot offset is related to at least one of the following: the fifth information, a quantity of the first beams, an amplitude quantization bit number in the first information, or whether to perform amplitude quantization adjustment on the projection coefficient of the first beam.

**19.** The method according to claim 15, wherein the method further comprises:

obtaining, by the terminal, a first time point; and
the transmitting, by the terminal, second information to the network side device comprises:
transmitting, by the terminal, second information at the first time point.

**20.** The method according to claim 19, wherein the obtaining, by the terminal, a first time point comprises:

receiving, by the terminal, second configuration information from the network side device, wherein the second configuration information is used for configuring the terminal to transmit delay information related to the second information or a delay of N symbols, N being an integer greater than or equal to 0, or obtaining, by the terminal, a delay of M symbols agreed upon by a protocol (M is an integer greater than or equal to 0); and
determining, by the terminal, the first time point based on the second configuration information or the delay of the M symbols.

**21.** The method according to claim 20, wherein the second configuration information is used for configuring at least one of the following:

a first delay, which is a processing delay of downlink control information DCI;
a second delay, which comprises a delay of channel state measurement; and
a third delay, which is a delay of the first processing.

**22.** The method according to claim 21, wherein in a case that the second configuration information is used for configuring the second delay and the third delay, a start point of the third delay is an end point of the second delay; and
in a case that the second configuration information is used for configuring the second delay, the second delay further comprises the delay of the first processing.

**23.** The method according to claim 20, wherein the N symbols or the M symbols comprise at least one of the following:

a first symbol, wherein the first symbol is used for processing DCI;
a second symbol, wherein the second symbol is used for channel state measurement; and
a third symbol, wherein the third symbol is used for the first processing.

**24.** The method according to any one of claims 19 to 23, wherein the first time point is in a one-to-one correspondence with a target data set, and the target data set is used for training the at least one first AI unit;
or,
in a case that the terminal has the at least two first AI units, the first time point is in a one-to-one correspondence with the first AI units.

**25.** The method according to any one of claims 1 to 24, wherein the first information is in a one-to-one correspondence with a target data set, and the target data set is used for training the at least one first AI unit.

**26.** The method according to any one of claims 1 to 25, wherein the first channel information comprises one of the following:

channel information of a sub-band; and
channel information of a layer (layer).

**27.** An information processing method, the method comprising:
transmitting, by a network side device, first information to a terminal in a case that the terminal reports channel information to the network side device based on an AI mode, wherein the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.

**28.** The method according to claim 27, wherein the first information comprises at least one of the following:

amplitude restriction information;
beam selection information; and
power restriction information.

29. The method according to claim 27 or 28, wherein the beam selection information comprises at least one of the following:

selection information of the first beam;
first indication information, wherein the first indication information is used for indicating the first beam in a candidate beam set;
a first parameter, wherein the first parameter comprises at least one of N1, N2, O1, and O2, the first parameter corresponds to the first beam, N1 and N2 represent beam identifiers in a horizontal or vertical direction, and O1 and O2 represent rotation factors in the horizontal or vertical direction;
information of a direction corresponding to the first beam;
identification information of a direction corresponding to the first beam; and
a bit map, wherein an element corresponding to the first beam in the bit map is a first value, an element corresponding to a second beam in the bit map is a second value, and the second beam comprises a beam other than the first beam in the at least two DFT beams.

30. The method according to claim 29, wherein the selection information of the first beam comprises at least one of the following:

third information, for indicating that the amplitude of the projection coefficient corresponding to the first beam is restricted; and
fourth information, for indicating that the amplitude of the projection coefficient corresponding to the first beam is unrestricted to be less than a preset threshold.

31. The method according to any one of claims 28 to 30, wherein the amplitude restriction information comprises at least one of the following:

amplitude information of the first beam; and
first restriction information, wherein the first restriction information comprises an amplitude restriction related to the first beam in the first channel information.

32. The method according to claim 31, wherein the amplitude information of the first beam comprises at least one of the following:

a maximum projection coefficient amplitude of the first beam; and
a projection coefficient amplitude ratio of the first beam.

33. The method according to claim 31 or 32, wherein the first restriction information indicates at least one of the following:

$$\text{satisfying Formula } |f^H \times W| = 0;$$

and

$$\text{satisfying Formula } |f^H \times W| \leq p,$$

wherein $|x|$ represents an amplitude of a vector x, f represents a vector of the first beam, $f^H$ represents a conjugate transpose of the vector of the first beam, W represents the second channel information, and p represents a restricted maximum amplitude value.

34. The method according to any one of claims 28 to 33, wherein the power restriction information comprises:
second restriction information, wherein the second restriction information comprises a power restriction related to the first beam in the first channel information.

**35.** The method according to claim 34, wherein the second restriction information indicates at least one of the following:

$$\text{satisfying Formula } |f^H \times W|^2 = 0;$$

and

$$\text{satisfying Formula } |f^H \times W|^2 \leq q,$$

wherein $|x|$ represents an amplitude of a vector x, f represents a vector of the first beam, $f^H$ represents a conjugate transpose of the vector of the first beam, W represents the second channel information, and q represents a restricted maximum power value.

**36.** The method according to any one of claims 27 to 35, wherein the method further comprises:

receiving, by the network side device, second information from the terminal, wherein the second information is information related to target channel feature information, and the target channel feature information is obtained by performing second processing on the second channel information based on a first AI unit of the terminal; and performing, by the network side device, third processing on the target channel feature information based on a second AI unit, to obtain third channel information.

**37.** The method according to claim 36, wherein the receiving, by the network side device, second information from the terminal comprises:

receiving, by the network side device, second information from the terminal based on a PUSCH resource; and the method further comprises:
transmitting, by the network side device, first configuration information to the terminal, wherein the first configuration information is used for configuring the terminal to report a time domain position or a slot offset of the second information.

**38.** The method according to claim 37, wherein the first configuration information is used for configuring any one of the following:

a first slot offset, wherein the first slot offset is a slot offset when the terminal does not perform the first processing, or the first slot offset is a slot offset when the terminal performs the first processing; and
a second slot offset and a third slot offset, wherein the second slot offset is a slot offset caused by the terminal performing the first processing, and the third slot offset is a slot offset when the terminal does not perform the first processing.

**39.** The method according to claim 38, wherein the method further comprises:
receiving, by the network side device, fifth information from the terminal, wherein the fifth information indicates at least one of the following:

whether the terminal requires or does not require the second slot offset to transmit the second information;
whether the terminal supports or does not support an amplitude restriction;
whether the terminal supports or does not support a partial amplitude restriction;
a maximum number of beams for first processing by the terminal in one slot; and
a maximum number of the first processing operations supported to be performed by the terminal in parallel.

**40.** The method according to claim 39, wherein the method further comprises:
determining, by the network side device, the second slot offset based on sixth information, or determining to configure or not configure the second slot offset, wherein the sixth information comprises at least one of the following:

the fifth information;
a quantity of the first beams;
an amplitude quantization bit number in the first information; and
whether the terminal performs amplitude quantization adjustment on the projection coefficient of the first beam.

**41.** The method according to any one of claims 27 to 40, wherein the method further comprises:

> obtaining, by the network side device, a first time point; and
> the receiving, by the network side device, second information from the terminal comprises:
>
> > receiving, by the network side device, second information from the terminal at the first time point, wherein the first time point comprises one of the following:
> >
> > > a time point determined based on delay information related to the second information; and
> > > a time point determined based on a delay of M symbols agreed upon by a protocol, wherein M is an integer greater than or equal to 0.

**42.** The method according to claim 41, wherein the method further comprises:
transmitting, by the network side device, second configuration information to the terminal, wherein the second configuration information is used for configuring the terminal to transmit the delay information related to the second information or the delay of N symbols, N being an integer greater than or equal to 0.

**43.** The method according to claim 42, wherein the second configuration information is used for configuring at least one of the following:

> a first delay, which is a processing delay of downlink control information DCI;
> a second delay, which comprises a delay of channel state measurement; and
> a third delay, which is a delay of the first processing.

**44.** The method according to claim 43, wherein in a case that the second configuration information is used for configuring the second delay and the third delay, a start point of the third delay is an end point of the second delay; and
in a case that the second configuration information is used for configuring the second delay, the second delay further comprises the delay of the first processing.

**45.** The method according to claim 43, wherein the N symbols or the M symbols comprise at least one of the following:

> a first symbol, wherein the first symbol is used for processing DCI;
> a second symbol, wherein the second symbol is used for channel state measurement; and
> a third symbol, wherein the third symbol is used for the first processing.

**46.** An information processing apparatus, comprising:

> a first obtaining module, configured to obtain first information in a case that a terminal reports channel information to a network side device based on an AI mode; and
> a first processing module, configured to perform first processing on first channel information based on the first information, to obtain second channel information, wherein the first processing is used for restricting an amplitude of a projection coefficient corresponding to a first beam in the first channel information, the AI mode is used for processing the second channel information, and the first information is related to at least one of the first beam and the first processing.

**47.** An information processing apparatus, comprising:
a first transmitting module, configured to transmit first information to a terminal in a case that the terminal reports channel information to a network side device based on an AI mode, wherein the first information is used by the terminal to perform first processing on the first channel information, to obtain second channel information, the first processing is used for restricting an amplitude of a projection coefficient corresponding to a first beam in the first channel information, the AI mode is used for processing the second channel information, and the first information is related to at least one of the first beam and the first processing.

**48.** A terminal, comprising a processor and a memory, wherein the memory stores a program or an instruction executable on the processor, and the program or the instruction, when executed by the processor, implements steps of the information processing method according to any one of claims 1 to 26.

**49.** A network side device, comprising a processor and a memory, wherein the memory stores a program or an instruction

**EP 4 704 360 A1**

executable on the processor, and the program or the instruction, when executed by the processor, implements steps of the information processing method according to any one of claims 27 to 44.

50. A readable storage medium, wherein the readable storage medium has a program or an instruction stored therein, and the program or the instruction, when executed by a processor, implements steps of the information processing method according to any one of claims 1 to 26, or steps of the information processing method according to any one of claims 27 to 44.

12

Network side device

11

11

Terminal

Terminal

FIG. 1

Input layer     Hidden layer     Output layer

$X_1$

$X_2$

$X_n$

$Y$

FIG. 2a

## FIG. 2b

Activation function

Weight

Bias

A terminal obtains first information in a case that the terminal reports channel information to a network side device based on an AI mode — 301

The terminal performs first processing on first channel information based on the first information, to obtain second channel information, where the first processing is used for restricting an amplitude of a projection coefficient corresponding to a first beam in the first channel information, and the AI mode is used for processing the second channel information — 302

## FIG. 3

End point of CSI
processing delay

PDCCH

Processing
delay Z

Processing
delay Z'

## FIG. 4a

End point of CSI
processing delay

PDCCH

Processing
delay Z

CSI-RS
resource
(Resource)

Processing
delay Z'

Processing
delay Z''

## FIG. 4b

A network side device transmits first information to a terminal in a case that the terminal reports channel information to the network side device based on an AI mode, where the first information is used by the terminal to perform first processing on the first channel information, to obtain second channel information, the first processing is used for restricting an amplitude of a projection coefficient corresponding to a first beam in the first channel information, and the AI mode is used for processing the second channel information — 501

## FIG. 5

— 600

Information processing apparatus

First obtaining module — 601

First processing module — 602

## FIG. 6

— 700

Information processing apparatus

First transmitting module — 701

## FIG. 7

800

Communication device

801  Processor  ⟷  Memory  802

FIG. 8

900

901  Radio frequency unit

Network module  902

910

909  Memory
Application
Operating system

Audio output unit  903

904

Input unit
Graphics processing unit  9041
Microphone  9042

908  Interface unit

Processor

907
User input unit
9071  Touch panel
9072  Another input device

906
Display unit  9061
Display panel

Sensor  905

FIG. 9

FIG. 10

**Revised ISR**

TRANSLATION

## INTERNATIONAL SEARCH REPORT

| International application No. |
| --- |
| **PCT/CN2024/088709** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, DWPI: 波束, 幅度, 上报, 报告, 投影, 系数, 限制, 降, 低, 减, 少, 信道, ai, amplitude, channel, coefficient, project+, beam?, report+, limit+, lower

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111656715 A (GUANGDONG OPPO MOBILE COMMUNICATIONS CO., LTD.) 11 September 2020 (2020-09-11) description, pages 3-6 | 1-50 |
| A | CN 115941137 A (VIVO COMMUNICATION TECHNOLOGY CO., LTD.) 07 April 2023 (2023-04-07) entire document | 1-50 |
| A | US 2022006496 A1 (LG ELECTRONICS INC.) 06 January 2022 (2022-01-06) entire document | 1-50 |
| A | CN 110958701 A (TELECOMMUNICATIONS TECHNOLOGY RESEARCH INSTITUTE CO., LTD.) 03 April 2020 (2020-04-03) entire document | 1-50 |
| A | HUAWEI et al. "UE capability of type II codebook" *3GPP TSG RAN WG1 Meeting #92 R1-1801809*, 02 March 2018 (2018-03-02), entire document | 1-50 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 July 2024** | **08 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088709**

| Patent document cited in search report | | | Publication date (day/month/year) | Patent family member(s) | | | Publication date (day/month/year) |
|---|---|---|---|---|---|---|---|
| CN | 111656715 | A | 11 September 2020 | WO | 2019232682 | A1 | 12 December 2019 |
| CN | 115941137 | A | 07 April 2023 | | None | | |
| US | 2022006496 | A1 | 06 January 2022 | WO | 2020091544 | A1 | 07 May 2020 |
| CN | 110958701 | A | 03 April 2020 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310457754